(19) Europäisches Patentamt
European Patent Office
Office européen des brevets

(11) EP 2 497 080 B1

(12) EUROPÄISCHE PATENTSCHRIFT

(45) Veröffentlichungstag und Bekanntmachung des Hinweises auf die Patenterteilung:
**25.12.2013 Patentblatt 2013/52**

(21) Anmeldenummer: **10771476.8**

(22) Anmeldetag: **02.11.2010**

(51) Int Cl.:
***G11B 7/245*** (2006.01) ***G11B 7/24*** (2013.01)

(86) Internationale Anmeldenummer:
**PCT/EP2010/066587**

(87) Internationale Veröffentlichungsnummer:
**WO 2011/054791 (12.05.2011 Gazette 2011/19)**

# (54) Verfahren zur herstellung eines holographischen films

Method for producing a holographic film

Procédé de fabrication d’un film holographique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2009 EP 09013768**

(43) Veröffentlichungstag der Anmeldung:
**12.09.2012 Patentblatt 2012/37**

(73) Patentinhaber: **Bayer Intellectual Property GmbH
40789 Monheim (DE)**

(72) Erfinder:
- **BRUDER, Friedrich-Karl
47802 Krefeld (DE)**
- **HÖNEL, Dennis
53909 Zülpich-Wichterich (DE)**
- **WEISER, Marc-Stephan
51379 Leverkusen (DE)**
- **RÖLLE, Thomas
51381 Leverkusen (DE)**
- **FÄCKE, Thomas
51375 Leverkusen (DE)**

(74) Vertreter: **BIP Patents
c/o Bayer Intellectual Property GmbH
Creative Campus Monheim
Alfred-Nobel-Straße 10
40789 Monheim (DE)**

(56) Entgegenhaltungen:
**WO-A-03/014178 WO-A-2008/125199**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 497 080 B1

## Beschreibung

Die Erfindung betrifft ein Verfahren zur Herstellung eines holographischen Films sowie nach dem Verfahren erhältlichen holographischen Film.

Holographische Filme können beispielsweise mit Hilfe von speziellen Photopolymer-Formulierungen hergestellt werden. So ist etwa in der WO 2008/125199 A1 eine Photopolymer-Formulierung beschrieben, die Polyurethan-basierte Matrixpolymere, ein Schreibmonomer auf Acrylatbasis sowie Photoinitiatoren enthält. Härtet man eine Schicht aus der Photopolymer-Formulierung aus, sind in der dabei gebildeten Polyurethanmatrix das Schreibmonomer und die Photoinitiatoren räumlich isotrop verteilt eingebettet. Auf diese Weise erhält man einen Film, in das Hologramme einbelichtet werden können.

Dies kann mittels der Überlagerung zweier kohärenter Lichtquellen erfolgen, wobei sich eine dreidimensionale Struktur in dem Medium ausbildet, die sich im allgemeinen durch eine regionale Änderung des Brechungsindexes (Brechungsindexmodulation $\Delta n$) beschreiben lässt. Derartige Strukturen werden Hologramme genannt, die auch als diffraktive optische Elemente beschrieben werden können. Dabei hängt es von der speziellen Belichtung ab, welche optischen Funktionen ein solches Hologramm ausbildet.

Für die Verwendungen von Photopolymer-Formulierungen spielt die durch die holographische Belichtung im Photopolymer erzeugte Brechungsindexmodulation $\Delta n$ die entscheidende Rolle. Bei der holographischen Belichtung wird das Interferenzfeld aus Signal- und Referenzlichtstrahl (im einfachsten Fall das zweier ebenen Wellen) durch die lokale Photopolymerisation von z.B. hochbrechenden Acrylate an Orten hoher Intensität im Interferenzfeld in ein Brechungsindexgitter abgebildet. Das Brechungsindexgitter im Photopolymeren (das Hologramm) enthält alle Information des Signallichtstrahls. Durch Beleuchtung des Hologramms nur mit dem Referenzlichtstrahl kann dann das Signal wieder rekonstruiert werden. Die Stärke des so rekonstruieten Signals im Verhältnis zur Stärke des eingestrahlten Referenzlichts wird Beugungseffizienz genannt, im folgenden DE wie Diffraction Efficiency. Im einfachsten Fall eines Hologramms, das aus der Überlagerung zweier ebener Wellen entsteht ergibt sich die DE aus dem Quotienten der Intensität des bei der Rekonstruktion abgebeugten Lichtes und der Summe der Intensitäten aus eingestrahltem Referenzlicht und abgebeugtem Licht. Je höher die DE desto effizienter ist ein Hologramm in Bezug auf die Lichtmenge des Referenzlichtes die notwendig ist, um das Signal mit einer festen Helligkeit sichtbar zu machen.

Hochbrechende Acrylate sind in der Lage, Brechungsindexgitter mit hoher Amplitude zwischen Bereichen mit niedrigem Brechungsindex und Bereichen mit hohem Brechungsindex zu erzeugen und damit in Photopolymer-Formulierungen Hologramme mit hohem DE und hohem $\Delta n$ zu ermöglichen. Dabei ist zu beachten, dass DE vom Produkt aus $\Delta n$ und der Photopolymerschichtdicke d abhängt. Je größer das Produkt desto größer die mögliche DE (für Reflexionshologramme). Die Breite des Winkelbereiches bei dem das Hologramm z.B. bei monochromatischer Beleuchtung sichtbar wird (rekonstruiert) hängt nur von der Schichtdicke d ab. Bei Beleuchtung des Hologramms mit z.B. weißem Licht hängt die Breite des spektralen Bereiches der zur Rekonstruktion des Hologramms beitragen kann ebenfalls nur von der Schichtdicke d ab. Dabei gilt je kleiner d desto größer die jeweiligen Akzeptanzbreiten.

Will man helle und leicht sichtbare Hologramme herstellen, ist ein hohes $\Delta n$ und eine geringe Dicke d anzustreben und zwar so das DE möglichst groß wird. Das heißt je höher $\Delta n$ wird, desto mehr Freiraum zur Gestaltung der Schichtdicke d für helle Hologramme erreicht man ohne Verlust an DE. Daher kommt der Optimierung von $\Delta n$ bei der Optimierung von Photopolymerformulierungen eine herausragenden Bedeutung zu (P. Hariharan, Optical Holography, 2nd Edition, Cambridge University Press, 1996).

Es ist daher bisher versucht worden, durch Veränderung der Zusammensetzung der zur Herstellung der holographischen Filme verwendeten Photopolymer-Formulierungen ein möglichst hohes $\Delta n$ zu realisieren. Allerdings hat sich gezeigt, dass die im Laborversuch entwickelten Photopolymer-Formulierungen nicht ohne teils erhebliche Probleme für die großtechnische Herstellung von holographischen Filmen eingesetzt werden können.

Ein derartiges großteclmisches Herstellungsverfahren ist beispielsweise in der noch nicht offengelegten europäischen Patentanmeldung mit der Anmeldenummer 09001952.2 beschrieben. Bei diesem Verfahren wird eine Photopolymer-Formulierung auf ein Trägermaterial aufgebracht und anschließend bei erhöhter Temperatur getrocknet. Auf diese Weise können holographische Medien in Form von Filmen erhalten werden.

Wenn die im Laborversuch für ein hohes $\Delta n$ optimierten Photopolymer-Formulierungen bei dem vorstehend beschriebenen Verfahren eingesetzt werden, erhält man in vielen Fällen Filme, auf denen die Photopolymer-Formulierung keine ausreichende mechanische Stabilität aufweist. Dies ist insbesondere nachteilig, da die Filme nicht als Rollen aufgewickelt werden können. So kann beispielsweise eine Verschiebung des Photopolymers bei Druckaufgabe durch die Schutzfolie auftreten oder die Klebrigkeit des Photopolymers ist so groß, dass beim Abziehen der Schutzfolie, wie es zum holographischen Belichten notwendig sein kann, die Photopolymerschicht oder zumindest deren Oberfläche zerstört wird.

Es ist somit bisher nicht ohne weiters möglich, Laborformulierungen für die großtechnische Herstellung von holgt-aphischen Filmen einzusetzen.

Aufgabe der vorliegenden Erfindung war daher ein (großtechnisches) Verfahren anzugeben, mit dessen Hilfe

holographische Filme mit einer ausreichenden mechanischen Stabilität hergestellt werden können, die insbesondere als Rollen aufgewickelt werden können.

Diese Aufgabe ist durch ein Verfahren zur Herstellung eines holographischen Films gelöst, bei dem

i) eine Photopolymer-Formulierung umfassend

A) Matrixpolymere als amorphes Netzwerk

B) eine Kombination eines monofunktionellen Schreibmonomers und eines multifunktionellen Schreibmonomers

C) ein Photoinitiatorsystem

D) optional eine nicht photopolymerisierbare Komponente

E) gegebenenfalls Katalysatoren, Radikalstabilisatoren, Lösungsmittel, Additive sowie andere Hilfs- und / oder Zusatzstoffe
bereit gestellt,

ii) die Photopolymer-Formulierung als Film flächig auf ein Substrat aufgebracht und

iii) der Film getrocknet wird,

wobei eine Photopolymer-Formulierung mit einen Plateaumodul von ≥ 0,03 MPa verwendet wird.

Es wurde gefunden, dass sich mechanisch stabile, wickelfähige holographische Filme herstellen lassen, wenn eine Photopolymer-Formulierung verwendet wird, die ein Plateaumodul von ≥ 0,03 MPa aufweist.

Unter Plateaumodul im Sinne der vorliegenden Anmeldung wird der Realteil des komplexen Schermoduls (auch Speichermodul genannt) der nicht belichteten Photopolymer-Formulierung verstanden.

Vorzugsweise kann eine Photopolymer-Formulierung mit einem Plateaumodul von ≥ 0,03 MPa und ≤ 1 MPa, bevorzugt von ≥ 0,05 MPa und ≤ 1 MPa, besonders bevorzugt von ≥ 0,1 MPa und ≤ 1 MPa und insbesondere bevorzugt von ≥ 0,1 MPa und ≤ 0,6 MPa verwendet werden.

Gemäß einer weiteren bevorzugten Ausführungsform der Erfindung ist vorgesehen, dass nach dem Trocknen im Schritt iii) auf den Film eine Kaschierfolie aufgebracht wird. Anschließend kann der Film vorzugsweise zusammen mit der Kaschierfolie aufgerollt werden.

Der Plateaumodul der Photopolymer-Formulierung kann insbesondere bestimmt werden, indem man den komplexen Schermodul der Photopolymerformulierung in einem Oszillationsrheometer in Platte-Platte Geometrie vermisst. Insbesondere wenn die Matrixkomponente A aus reaktiven Komponenten (z. B. einem 2K-System) besteht, kann damit die zeitliche Entwicklung des Schermoduls der Photopolymerformulierung über der Zeit der Aushärtung der Matrixkomponente verfolgt werden, an deren Ende sich der Plateaumodul als Realteil des sich einstellenden komplexen Schermoduls ergibt. Aus Gründen der einfacheren Durchführung der Messung des Plateaumoduls kann dabei auf das Photoinitiatorsystem (Komponente C)) in der Photopolymerformulierung verzichtet werden.

Bei den Matrixpolymeren (Komponente A)) kann es sich vorzugsweise um Polyurethane handeln, die insbesondere durch Umsetzung einer Isocyanatkomponente a) mit einer Isocyanat-reaktiven Komponente b) erhältlich sind.

Die Isocyanatkomponente a) umfasst bevorzugt Polyisocyanate. Als Polyisocyanate können alle dem Fachmann an sich bekannten Verbindungen oder deren Mischungen eingesetzt werden, die im Mittel zwei oder mehr NCO-Funktionen pro Molekül aufweisen. Diese können auf aromatischer, araliphatischer, aliphatischer oder cycloaliphatischer Basis sein. In untergeordneten Mengen können auch Monoisocyanate und/oder ungesättigte Gruppen enthaltende Polyisocyanate mitverwendet werden.

Beispielsweise geeignet sind Butylendiisocyanat, Hexamethylendiisocyanat (HDI), Isophorondiisocyanat (IPDI), 1,8-Diisocyanato-4-(isocyanatomethyl)-octan, 2,2,4- und/oder 2,4,4-Trimethylhexamethylendiisocyanat, die isomeren Bis-(4,4'-isocyanatocyclohexyl)methan und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat und/oder Triphenylmethan-4,4',4"-triisocyanat.

Ebenfalls möglich ist der Einsatz von Derivaten monomerer Di- oder Triisocyanate mit Urethan-, Hartstoff-, Carbodiimid-, Acylharnstoff-, Isocyanurat-, Allophanat-, Biuret-, Oxadiazintrion-, Uretdion- und/oder Iminooxadiazindionstrukturen.

Bevorzugt ist der Einsatz von Polyisocyanaten auf Basis aliphatischer und/oder cycloaliphatischer Di- oder Triisocyanate.

Besonders bevorzugt handelt es sich bei den Polyisocyanaten der Komponente a) um di- oder oligomerisierte aliphatische und/oder cycloaliphatische Di- oder Triisocyanate.

Ganz besonders bevorzugt sind Isocyanurate, Uretdione und/oder Iminooxadiazindione basierend auf HDI sowie 1,8-Diisocyanato-4-(isocyanatomethyl)-octan oder deren Mischungen.

Ebenfalls können als Komponente a) NCO-funktionelle Prepolymere mit Urethan-, Allophanat-, Biuret- und/ oder Amidgruppen eingesetzt werden. Prepolymere der Komponente a) werden in dem Fachmann an sich gut bekannter Art und Weise durch Umsetzung von monomeren, oligomeren oder Polyisocyanaten a1) mit isocyanatreaktiven Verbindungen a2) in geeigneter Stöchiometrie unter optionalem Einsatz von Katalysatoren und Lösemitteln erhalten.

Als Polyisocyanate a1) eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Daneben können auch die diem Fachmann an sich gut bekannten höhermolekularen Folgeprodukte monomerer Di- und/oder Triisocyanate mit Urethan-, Harnstoff-, Carbodiimid-, Acylhamstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Komponente a1) eingesetzt werden können, sind Butylendiisocyanat, Hexamethylendiisocyanat (HDI), Isophorondiisocyanat (IPDI), Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und/ oder 2,6-Toluen-diisocyanat.

Als isocyanatreaktive Verbindungen a2) zum Aufbau der Prepolymere werden bevorzugt OH-funktionelle Verbindungen eingesetzt. Diese sind analog den OH-funktionellen Verbindungen wie sie nachfolgend für die Komponente b) beschrieben sind.

Allophanate können auch im Gemisch mit anderen Prepolymeren oder Oligomeren der Komponente a1) eingesetzt werden. In diesen Fällen ist der Einsatz von OH-funktionellen Verbindungen mit

Funktionalitäten von 1 bis 3,1 vorteilhaft. Beim Einsatz monofunktioneller Alkohole sind solche mit 3 bis 20 Kohlenstoffatomen bevorzugt.

Ebenfalls möglich ist der Einsatz von Aminen zur Prepolymerherstellung. Beispielsweise geeignet sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine aminterminierte Polymere mit zahlenmittleren Molmassen bis 10000 g/Mol oder deren beliebige Gemische untereinander.

Zur Herstellung von biuretgruppenhaltigen Prepolymeren wird Isocyanat im Überschuss mit Amin umgesetzt, wobei eine Biuretgruppe entsteht. Als Amine eignen sich in diesem Falle für die Umsetzung mit den erwähnten Di-, Tri- und Polyisocyanaten alle oligomeren oder polymeren, primären oder sekundären, difunktionellen Amine der vorstehend genannten Art. Beispiele sind aliphatische Biurete auf Basis aliphatischer Amine und aliphatischer Isocyanate, insbesondere HDI und TMDI.

Bevorzugte Prepolymere sind Urethane, Allophanate oder Biurete aus aliphatischen Isocyanatfunktionellen Verbindungen und oligomeren oder polymeren Isocyanat-reaktiven Verbindungen mit zahlenmittleren Molmassen von 200 bis 10000 g/Mol.

Bevorzugt weisen die vorstehend beschriebenen Prepolymere Restgehalte an freiem monomeren Isocyanat von weniger als 2 Gew.-%, besonders bevorzugt weniger als 1,0 Gew.-%, ganz besonders bevorzugt weniger als 0,5 Gew.% auf.

Selbstverständlich kann die Isocyanatkomponente anteilsmäßig neben den beschriebenen Prepolymeren weitere Isocyanatkomponenten enthalten. Es ist gegebenenfalls auch möglich, dass die Isocyanatkomponente a) anteilsmäßig Isocyanate enthält, die teilweise mit isocyanat-reaktiven ethylenisch ungesättigten Verbindungen umgesetzt sind.

Es ist gegebenenfalls auch möglich, dass die vorgenannten Isocyanatkomponente a) vollständig oder anteilsmäßig Isocyanate enthält, die ganz oder teilweise mit dem Fachmann aus der Beschichtungstechnologie bekannten Blockierungsmitteln umgesetzt sind. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Als Komponente b) können an sich alle polyfunktionellen, isocyanatreaktiven Verbindungen eingesetzt werden, die im Mittel wenigstens 1.5 isocyanatreaktive-Gruppen pro Molekül aufweisen.

Isocyanatreaktive Gruppen im Rahmen der vorliegenden Erfindung sind bevorzugt Hydroxy-, Amino- oder Thiogruppen, besonders bevorzugt sind Hydroxyverbindungen.

Geeignete polyfunktionelle, isocyanatreaktive Verbindungen sind beispielsweise Polyester-, Polyether-, Polycarbonat-, Poly(meth)acrylat- und/oder Polyurethanpolyole.

Daneben sind als Bestandteile der Komponente b) als polyfunktionelle, isocyanatreaktive Verbindungen auch niedermolekulare, d.h. mit Molekulargewichten kleiner 500 g/mol, kurzkettige, d.h. 2 bis 20 Kohlenstoffatome enthaltende

aliphatische, araliphatische oder cycloaliphatische di, tri oder polyfunktionelle Alkohole geeignet.

Dies können beispielsweise sein Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure (2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Als Polyesterpolyole sind beispielsweise lineare Polyesterdiole oder verzweigte Polyesterpolyole geeignet, wie sie in bekannter Weise aus aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden. Bevorzugte Polyesterpolyole basieren auf aliphatischen Alkoholen und Mischungen aus aliphatischen und aromatischen Säuren und haben zahlenmittlere Molmassen zwischen 500 und 10000 g/Mol und Funktionalitäten zwischen 1,8 und 6,1.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen im Rahmen einer ringöffnenden Lacton-Polymerisation wie Butyrolacton, ε-Caprolacton und/oder Methyl-ε-caprolacton an hydroxyfunktionelle Verbindungen wie mehrwertige Alkohole einer OH-Funktionalität ≥ 2 oder Polyole eine Funktionalität von größer 1,8 beispielsweise der vorstehend genannten Art erhalten werden können.

Beispiele für hier als Starter eingesetzte Polyole sind Polyetherpolyole einer Funktionalität von 1,8 bis 3,1 mit zahlenmittleren Molmassen von 200 bis 4000 g/mol, bevorzugt sind Poly(tetrahydrofurane) mit einer Funktionalität von 1,9 bis 2,2 und zahlenmittleren Molmassen von 500 bis 2000 g/mol. Als Anlagerungsprodukte sind Butyrolacton, ε-Caprolacton und/oder Methyl-ε-caprolacton, ε-Caprolacton ist besonders bevorzugt.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkoholen einer OH-Funktionalität ≥ 2, bevorzugt 1,4-Butandiol, 1,6-Hexandiol und/oder 3-Methylpentandiol, oder auch Polyesterpolyole können zu Polycarbonatpolyolen umgearbeitet werden.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin, sowie ihre beliebigen Mischungen.

Als Starter können die an sich im Rahmen der Polyesterpolyole genannten mehrweitigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden, wobei der 1-Alykenoxidanteil nicht höher als 80 Gew.-% ist. Besonders bevorzugt sind Propylenoxid-homopolymere sowie statistische oder Block-Copolymere, die Oxyethylen-, Oxypropylen- und/oder Oxybutyleneinheiten aufweisen, wobei der Anteil der Oxypropyleneiheiten bezogen auf die Gesamtmenge aller Oxyethylen-, Oxypropylen- und Oxybutyleneiheiten mindestens 20 Gew.-%, bevorzugt mindestens 45 Gew.% ausmacht. Oxypropylen- und Oxybutylen- umfasst hierbei alle jeweiligen linearen und verzweigten C3- und C4-Isomere.

Als spezielle Polyetherpolyole werden bevorzugt solche eingesetzt, die aus einer isocyanatreaktiven Komponente umfassend hydroxyfunktionelle Multiblockcopolymere des Typs Y(Xi-H)n mit i = 1 bis 10 und n = 2 bis 8 und zahlenmittleren Molekulargewichten von größer 1500 g/Mol bestehen, wobei die Segmente xi jeweils aus Oxyalkyleneinheiten der Formel (I) aufgebaut sind,

-CH2-CH(R)-O- Formel (I)

wobei R ein Wasserstoff-, Alkyl-, oder Arylrest, ist, der auch substituiert oder durch Heteroatome (wie Ethersauerstoffe) unterbrochen sein kann, Y der zugrundeliegende Starter ist und der Anteil der Segmente Xi bezogen auf die Gesamtmenge der Segmente Xi und Y wenigstens 50 Gew.-% ausmacht.

In Formel (I) ist R bevorzugt ein Wasserstoff, eine Methyl-, Butyl-, Hexyl- oder Octylgruppe oder ein ethergruppenhaltiger Alkylrest. Bevorzugte ethergruppenhaltiger Alkylreste sind solche basierend auf Oxyalkyleneinheiten.

Die Multiblockcopolymere $Y(X_i\text{-}H)_n$ haben bevorzugt zahlenmittlere Molekulargewichte von mehr als 1200 g/Mol, besonders bevorzugt mehr als 1950 g/Mol, jedoch bevorzugt nicht mehr als 12000 g/Mol, besonders bevorzugt nicht mehr als 8000 g/Mol.

Bevorzugt eingesetzte Blockcopolymere der Struktur $Y(X_i\text{-}H)_n$ bestehen zu mehr als 50 Gewichtsprozent aus

den oben als erfindungsgemäß beschriebenen Blöcken $X_i$ und haben eine zahlenmittlere Gesamtmolmasse von größer 1200 g/Mol.

Bevorzugte Kombinationen aus Komponente a) und b) bei der Herstellung der Matrixpolymere sind:

α) Additionsprodukte von Butyrolacton, ε-Caprolacton und/oder methyl-ε-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Besonders bevorzugt Additionsprodukte von ε-Caprolacton an Poly(tetrahydrofurane) mit einer Funktionalität von 1,9 bis 2,2 und zahlenmittleren Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

β) Polyetherpolyole mit zahlenmittlere Molmassen von 500 bis 8500 g/Mol und OH-Funktionalitäten von 1,8 bis 3,2, ausschließlich basierend auf Propylenoxid oder statistische oder Block-Copolyole basierend auf Propylenoxid und Ethylenoxid, wobei der Ethylenoxidanteil nicht höher als 60 Gew.-% ist in Verbindung mit Urethanen, Allophanaten oder Biureten aus aliphatischen Isocyanatefunktionellen Verbindungen und oligomeren oder polymeren Isocyanat-reaktiven Verbindungen mit zahlenmittleren Molmassen von 200 bis 6000 g/Mol. Besonders bevorzugt sind Propylenoxid-homopolymere mit zahlenmittlere Molmassen von 1800 bis 4500 g/Mol und OII-Funktionalitäten von 1,9 bis 2,2 in Verbindung mit Allophanaten aus HDI oder TMDI und difunktionellen Polyetherpolyolen (insbesondere Polypropylenglykolen) mit zahlenmittleren Molmassen von 200 bis 2100 g/Mol.

y) Polyetherblock- oder -multiblockcopolymere der Formel (I), wobei Y ein rein aliphatisches Polycarbonatpolyol oder ein Polymer des Tetrahydrofurans mit jeweils einer OH-Funktionalität von 1,8 bis 3,1 und einer zahlenmittlere Molmassen von 400 bis 2000 g/Mol ist, n = 2, i = 1 oder 2 und R = Methyl oder H ist, mit einer gesamten zahlenmittleren Molmasse von 1950 bis 9000 g/mol in Verbindung mit Urethanen, Allophanaten oder Biureten aus aliphatischen Isocyanat-funktionellen Verbindungen und oligomeren oder polymeren Isocyanat-reaktiven Verbindungen mit zahlenmittleren Molmassen von 200 bis 6000 g/Mol oder in Verbindung mit Isocyanuraten, Uretdionen, Iminooxadiazindionen und/oder anderen Oligomeren basierend auf HDI. Besonders bevorzugt sind Polyetherblock- oder -multiblockcopolymere der Formel (I), wobei Y ein rein aliphatisches Polycarbonatpolyol auf Basis 1,4-Butandiol und/oder 1,6-Hexandiol mit Dimethyl- oder Diethylcarbonat oder ein Polymer des Tetrahydrofurans mit einer OH-Funktionalität von 1,8 bis 2,2 und einer zahlenmittlere Molmassen von 600 bis 1400 g/Mol (insbesondere bis 1000 g/Mol) ist, n = 2, i = 1 oder 2 und R = Methyl oder H ist, wobei der Anteil der Ethylenoxideinheiten an der Gesamtmasse von $X_i$ nicht höher als 60 Gew.-% ist, in Verbindung mit Allophanaten aus HDI oder TMDI und difunktionellen Polyetherpolyolen (insbesondere Polypropylenglykolen) mit zahlenmittleren Molmassen von 200 bis 2100 g/Mol, in Verbindung mit Biureten mit zahlenmittleren Molmassen von 200 bis 1400 g/Mol (insbesondere auch im Gemisch mit anderen Oligomeren difunktioneller aliphatischer Isocyanate) basierend auf aliphatischer Diaminen oder Polyaminen und aliphatischen Diisocyanaten, insbesondere HDI und TMDI, in Verbindung mit Urethanen aus HDI oder TMDI auf Basis von Additionsprodukten von Butyrolacton, ε-Caprolacton und/oder Methyl-ε-caprolacton (insbesondere ε-Caprolacton) an 2 bis 20 Kohlenstoffatome enthaltende aliphatische, araliphatische oder cycloaliphatische di-, tri- oder polyfunktionelle Alkohole (insbesondere an difunktionelle aliphatische Alkohole mit 3 bis 12 Kohlenstoffatomen) mit zahlenmittleren Molmassen von 200 bis 3000 g/Mol, insbesondere bevorzugt von 1000 bis 2000 g/Mol (insbesondere im Gemisch mit anderen Oligomeren difunktioneller aliphatischer Isocyanate) oder in Verbindung mit Isocyanuraten, Iminooxadiazindionen und/oder anderen Oligomeren basierend auf HDI.

Als Komponente B) werden ein oder mehrere verschiedene Verbindungen, die unter Einwirkung aktinischer Strahlung mit ethylenisch ungesättigten Verbindungen unter Polymerisation reagierende Gruppen (strahlenhärtende Gruppen) aufweisen und selbst frei von NCO-Gruppen sind, eingesetzt.

In Komponente B) können Verbindungen wie α,β-ungesättigte Carbonsäuredetivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol, Olefine, wie z.B. 1-Octen und/oder 1-Decen, Vinylestern, (Meth)acrylnitril, (Meth)acrylamid, Methacrylsäure, Acrylsäure eingesetzt werden. Bevorzugt sind Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat,

2,4,6-Trichlorphenylmethacrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate um nur eine Auswahl verwendbarer Acrylate und Methacrylate zu nennen.

Selbstverständlich können auch Urethanacrylate als Komponente B) verwendet werden. Unter Urethanacrylaten versteht man Verbindungen mit mindestens einer Acrylsäureestergruppe die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Bevorzugt werden dabei Acrylate und Methacrylate mit einem Brechungsindex $n_D^{20}$ (gemessen bei einer Wellenlänge von 405 nm) von größer 1,450 eingesetzt. Besonders bevorzugt werden Acrylate eingesetzt, die mindestens eine aromatische Struktureinheit enthalten und einen Brechungsindex $n_D^{20}$ von größer 1,500 haben. Als besonders geeignete Beispiele hierfür sind Acrylate und Methacrylate auf Basis von Bisphenol A oder dessen Derivate zu nennen sowie solche Acrylate und Methacrylate, die eine Thioarylgruppe enthalten.

Beispiele für die als Komponente B) verwendeten Urethanacrylate und/ oder Urethanmethacrylate sind die Additionsprodukte aromatischer Triisocyanate (ganz besonders bevorzugt Tris-(4-phenylisocyanato)-thiophosphat oder Trimere aromatischer Diisocyanate wie Toluylendiisocyanat) mit Hydroxyethylacrylat, Hydroxypropylacrylat, 4-Hydroxybutylacrylat, die Additionsprodukte von 3-Thiomethyl-phenylisocyanat mit Hydroxyethylacrylat, Hydroxypropylacrylat, 4-Hydroxy-butylacrylat sowie ungesättigte Glycidyletheracrylaturethane (wie in den Anmeldungen WO 2008/125229 A1 und in der nicht vorveröffentlichten Anmeldung EP 09009651.2 beschrieben) oder deren beliebige Mischungen untereinander.

Weiterhin ist die Verwendung von Glycidyletheracrylaturethanen als Schreibmonomere bevorzugt. Diese gehorchen der allgemeinen Formel (IIa) oder (IIb) oder Mischungen aus (IIa) und (IIb)

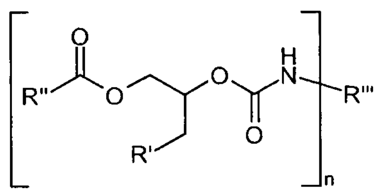

(IIa)

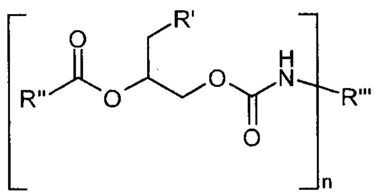

(IIb)

wobei

n	eine natürliche Zahl von 2 bis 6 ist

R'	ein ein- oder mehrkerniger Aromatengruppen haltiger organischer Rest mit 4 bis 36 Kohlenstoffatomen ist,

R''	ein olefinisch ungesättigter Rest mit 3 bis 30 Kohlenstoffatomen ist und

R'''	ein von einem aliphatischen oder aromatischen Di- oder Polyisocyanat abgeleiteter organischer Rest mit 2 bis 30 Kohlenstoffatomen ist.

Die ungesättigten Glycidyletheracrylaturethane der Formel IIa bzw. IIb können in einer 2-Stufen Synthese hergestellt werden. In der ersten Umsetzung wird eine ungesättigte Carbonäure mit einem Epoxid zur Reaktion gebracht, wobei ein Gemisch zweier Alkohole gebildet wird. Selbstverständlich können in diesem Reaktionsschritt auch ungesättigte Epoxide mit beliebigen Carbonsäuren zum analogen Zwischenprodukt umgesetzt werden. In einem zweiten Reaktionsschritt wird dieses Alkoholgemisch mittels eines Di- oder Polyisocyanats R'''(NCO)$_n$ der Funktionalität n zum Glycidyletheracrylaturethan urethanisiert (wie in der nicht vorveröffentlichten Anmeldung EP 09002180.9 beschrieben). Bevorzugt werden dabei Methacrylsäure und Acrylsäure oder deren Derivate bzw. aromatische Carbonsäuren für die Umsetzung mit einem ungesättigten Epoxid eingesetzt, als Epoxide finden bevorzugt aromatische oder ungesättigte Epoxide wie Phenyl-, Dibromophenyl-, Naphthyl- oder Biphenylglycidether oder Glydidyl(meth)acrylat Anwendung und als Isocyanatkomponente verwendet man bevorzugt Toluolyldiisocyanat (TDI), Hexamethylendiisocyanat (HDI) oder Triisocyanatononan (TIN).

In einer ganz besonders bevorzugten Ausführungsform werden die Kombinationen aus (Acrylsäure, Biphenylglycidether und TDI), (Acrylsäure, Phenylglycidether und TDI) sowie (Acrylsäure, Biphenylglycidether und HDI) verwendet.

Das monofunktionelle Schreibmonomer kann insbesondere die allgemeine Formel (III)

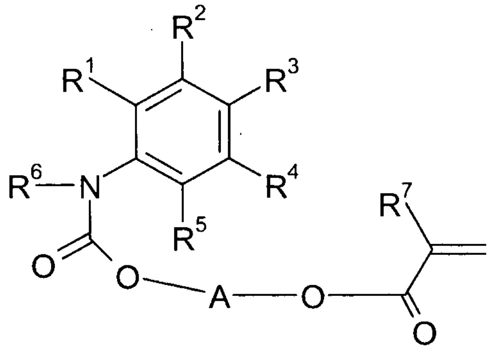

(III)

haben, in der $R^1$, $R^2$, $R^3$, $R^4$, $R^5$ jeweils unabhängig voneinander ein Wasserstoff- oder Halogenatom oder eine C1-C6-Alkyl-, Trifluormethyl-, C1-C6-Alkylthio-, C1-C6-Alkylseleno-, C1-C6-Alkyltelluro- oder Nitro-Gruppe sind, mit der Maßgabe dass wenigstens ein Substituent der Gruppe $R^1$, $R^2$, $R^3$, $R^4$, $R^5$ nicht Wasserstoff ist, $R^6$, $R^7$ jeweils für sich Wasserstoff oder eine C1-C6-Alkylgruppe sind und A ein gesättigter oder ungesättigter oder linearer oder verzweigter C1-C6-Alkyl-Rest oder ein Polyethylenoxid-Rest oder ein Polypropylenoxid-Rest mit jeweils 2-6 Widerholungseinheiten in der Polymerkette ist, und das monofunktionelle Schreibmonomer bevorzugt eine Glastemperatur $T_G$ < 0°C und bevorzugt einen Brechungsindex >1.50 bei 589 nm aufweist.

Das multifunktionelle Schreibmonomer kann insbesondere die allgemeine Formel (IV)

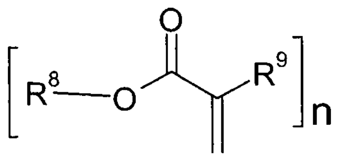

(IV)

haben, in der n≥2 und n≤4 ist und $R^8$, $R^9$ Wasserstoff und / oder unabhängig voneinander lineare, verzweigte, cyclische oder heterocyclische unsubstituierte oder gegebenenfalls auch mit Heteroatomen substituierte organische Reste sind. Weiterhin kann das multifunktionelle Schreibmonomer bevorzugt einen Brechungsindex >1.50 bei 589 nm aufweisen.

Als Komponente C) werden ein oder mehrere Photoinitiatoren eingesetzt. Das verwendete Photoinitiatorsystem kann vorzugsweise einen anionischen, kationischen oder neutralen Farbstoff und einen Coinitiator umfassen. Beispiele sind Mischungen aus Tetrabutylammonium Triphenylhexylborat, Tetrabutylammonium Triphenylbutylborat, Tetrabutylammonium Trinapthylbutylborat, Tetrabutylammonium Tris-(4-tert.-butyl)-phenylbutylborat, Tetrabutylammonium Tris-(3-fluorphenyl)-hexylborat und Tetrabutylammonium Tris-(3-Chlor-4-methylphenyl)-hexylborat mit Farbstoffen wie beispielsweise Astrazon Orange G, Methylenblau, Neu Methylenblau, Azur A, Pyrillium I, Safranin O, Cyanin, Gallocyanin, Brilliant Grün, Kristallviolett, Ethylviolett und Thionin.

Bevorzugt ist vorgesehen, das die Photopolymer-Formulierung spezielle nicht photopolymerisierbare Additive enthält (Komponente D)). Bei diesen Additiven kann es sich insbesondere um Urethane handeln, wobei die Urethane bevorzugt mit wenigstens einem Fluoratom substituiert sein können.

Besonders bevorzugt können als Komponente D) Urethane der allgemeinen Formel (V)

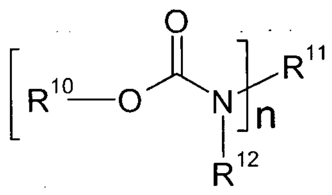

(V)

verwendet werden, bei denen n≥1 und n≤8 ist und $R^{10}$, $R^{11}$, $R^{12}$ Wasserstoff und / oder unabhängig voneinander lineare, verzweigte, cyclische oder heterocyclische unsubstituierte oder gegebenenfalls auch mit Heteroatomen substituierte organische Reste sind, wobei bevorzugt mindestens einer der Reste $R^{10}$, $R^{11}$, $R^{12}$ mit wenigstens einem Fluoratom substituiert ist und besonders bevorzugt $R^{10}$ ein organischer Rest mit mindestens einem Fluoratom ist.

Weitere Bestandteile der Photopolymer-Formulierung können sein (Komponenten E)): Radikalstabilisatoren, gegebenenfalls Katalysatoren oder andere Hilfs- und Zusatzstoffe.

Als Beispiele für Radikalstabilisatoren sind Inhibitoren und Antioxidantien wie sie z.B. in "Methoden der organischen Chemie" (Houben-Weyl), 4. Auflage, Band XIV/1, S. 433ff, Georg Thieme Verlag, Stuttgart 1961, beschrieben sind, geeignet. Geeignete Stoffklassen sind beispielsweise Phenole wie z.B. 2,6-Di-tert-butyl-4-methylphenol, Kresole, Hydrochinone, Benzylalkohole wie z.B. Benzhydrol, ggf. auch Chinone wie z. B. 2,5-Di-tert.-Butylchinon, ggf. auch aromatische Amine wie Diisopropylamin oder Phenothiazin.

Bevorzugt sind 2,6-Di-tert.-butyl-4-methylphenol, Phenothiazin, p-Methyoxyphenol, 2-Methoxy-p-hydrochinon und Benzhydrol.

Gegebenenfalls können ein oder mehrere Katalysatoren eingesetzt werden. Dabei handelt es sich um Katalysatoren zur Beschleunigung der Urethanbildung. Bekannte Katalysatoren hierfür sind beispielsweise Zinnoctoat, Zinkoktoat, Dibutylzinndilaurat, Dimethylbis[(1-oxoneodecyl)oxy]stannan, Dimethylzinndicarboxylat, Zirkonium-bis (ethylhexanoat), Zirconiumacteylacetonat oder tertiäre Aminen wie beispielsweise 1,4-Diazabicyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin.

Bevorzugt sind Dibutylzinndilaurat, Dimethylbis[(1-oxoneodecyl)oxy]stannan, Dimethylzinndicarboxylat, 1,4-Diazabicyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin. Selbstverständlich können gegebenenfalls weitere Hilfs- oder Zusatzstoffe eingesetzt werden (auch Komponenten E)). Dabei kann es sich beispielsweise um im Bereich der Lacktechnologie gängige Zusatzstoffe wie Lösemittel, Weichmacher, Verlaufsmittel oder Haftvermittler handeln. Es kann auch von Vorteil sein, gleichzeitig mehrere Zusatzstoffe eines Typs zu verwenden. Selbstverständlich kann es ebenfalls von Vorteil sein, mehrere Zusatzstoffe mehrerer Typen zu verwenden.

Fü r die Beschichtung oben genannter Photopolymerzusammensetzungen auf einer Rollenbeschichtungsanlage muss gewährleistet sein, dass die Gesamtformulierung nach Aushärtung der Matrix (Komponente A)) und vor der Belichtung einen Plateaumodul $G_0$ von mindestens 0,03 MPa aufweist.

Ein Film aus der Photopolymer-Formulierung kann beispielsweise mit Hilfe einer Rollenbeschichtungsanlage auf einer Trägerfolie aufgebracht werden.

Dies kann durch eine Kombination verschiedener Prozessschritte erfolgen, bei denen dem Fachmann bekannte Zwangsdosierpumpen, Vakuumentgaser, Plattenfilter, Statische Mischer, Schlitzdüsen oder verschiedene Rakelsysteme, Ein-Rollenabwickler, Lufttrockner, Trockenkaschiereinrichtung und eine Ein-Rollenaufwickeleinrichtung, eingesetzt werden. Speziell eine Beschichtungseinrichtungen, die z.B. Schlitzdüsen und Rakelsysteme aufweisen, sind für die Applikation von flüssigen Photopolymer-Formulierungen auf bewegende Trägermaterialien geeignet und zeichnen sich durch eine hohe Genauigkeit in der Applikationsschichtdicke aus.

In einer bevorzugten Ausführungsform umfasst der Beschichtungsprozess der Trägerfolie die nachfolgenden Einzelschritte zur Behandlung vorgenannten Photopolymer-Formulierungen:

I. Fördern und Dosieren zum einen der Komponente a) gegebenenfalls gemischt mit einer oder mehrerer der Komponenten B), C), D) und E) sowie zum anderen separat dazu der Komponente b) gegebenenfalls gemischt mit einer oder mehrerer der Komponenten B), C), D) und E)

II. Entgasen der gemäß I) geförderten, dosierten und gegebenenfalls vorvermischten Ströme

III. Filtrieren der nach II) erhaltenen Mischung

IV. Homogenisieren der nach III) erhaltenen Mischung

V. Abwicklung und Vorbehandlung der Trägerfolie

VI. Beschichten der Trägerfolie mit der nach Schritt IV) erhaltenen Mischung

VII. Trocknung des nach VI) beschichteten Films

VIII. Kaschieren des nach VII) erhaltenen beschichteten Films

IX. Aufwicklung des nach VIII) erhaltenen kaschierten Films

In einer besonders bevorzugten Ausführung erfolgt dabei die Dosierung der Einsatzstoffe entweder durch Zahnrad- oder Excenterschneckenpumpen. Zur Entgasung der Einsatzstoffe werden Zentrifugalentgaser und zur Filterung Plattenfilter eingesetzt. Die Mischung der Einzelkomponenten erfolgt über einen statischen Mischer mit entsprechend ausgelegten Mischgeometrien, wie z.B. Länge und Durchmesser. Als bevorzugte Beschichtungseinheit wird eine Schlitzdüse eingesetzt. Das beschichtete Material wird über Lufttrockner mit der gewünschten Lufttemperatur und Feuchtgehalt über einen definierten Zeitraum getrocknet.

Figur 4 zeigt einen schematischen Aufbau einer typischen Beschichtungsanlage, inklusive Anordnung der Vorbehandlung des Beschichtungsmaterials (1-5), schematischer Verlauf des Trägerfolie (8 + 9), Beschichtungseinrichtung zum Applizieren auf die Trägerfolie (6) und anschließenden Trocknungsprozess (7).

In der Figur 4 stehen die Bezugszeichen für die folgenden Bauteile:

1 Vorratsbehälter

2 Dosiereinrichtung

3 Vakuumentgasung

4 Filter

5 Statischer Mischer

6 Beschichtungseinrichtung

7 Trockner

8 Bahnlauf

9 Produkt-Kaschierung

Durch die Kombination der beschriebenen Prozessschritte wie in Figur 4 dargestellt, können Photopolymer-Formulierungen auf sich bewegende Trägermaterialien in einer hohen Schichtdickengenauigkeit appliziert werden.

Gemäß einer weiteren bevorzugten Ausführungsform können die holographischen Medien Folienverbunde sein, die aus einer oder mehreren Trägerfolien, einer oder mehreren Photopolymerschichten und einer oder mehrer Schutzfolien in beliebiger Anordnung bestehen können.

Bevorzugte Materialien oder Materialverbünde der Trägerschicht basieren auf Polycarbonat (PC), Polyethylenterephthalat (PET), Polybutylenterephthalat, Polyethylen, Polypropylen, Celluloseacetat, Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral oder Polydicyclopentadien oder deren Mischungen. Daneben können Materialverbünde wie Folienlaminate oder Coextrudate als Trägerfolie Anwendung finden. Beispiele für Materialverbünde sind Duplex- und Triplexfolien aufgebaut nach einem der Schemata A/B, A/B/A oder A/B/C wie PC/PET, PET/PC/PET und PC/TPU (TPU = Thermoplastisches Polyurethan). Besonders bevorzugt wird PC und PET als Trägerfolie verwendet.

Zusätzlich zu den Bestandteilen und können für den Folienverbund ein oder mehrere Abdeckschichten auf der Photopolymerschicht aufweisen, um diese vor Schmutz und Umwelteinflüssen zu schützen. Hierzu können Kunststofffolien oder Folienverbundsysteme, aber auch Klarlacke verwendet werden.

Außerdem können weitere Schutzschichten, so z.B. eine untere Kaschierung der Trägerfolie Anwendung finden.

Ein weiterer Gegenstand der Erfindung ist ein nach dem erfindungsgemäßen Verfahren erhältliches holographisches Medium.

Noch ein weiterer Gegenstand der vorliegenden Erfindung ist die Verwendung der holographischen Filme zur

Aufzeichnung visueller Hologramme, zur Herstellung von optischen Elementen, Bildern, Darstellungen sowie ein Verfahren zur Aufzeichnung von Hologrammen unter Verwendung der holographischen Filme.

Mit den holographischen Filmen können durch entsprechende Belichtungsprozesse Hologramme für optische Anwendungen im gesamten sichtbaren Bereich sowie im nahen UV-Bereich (300 - 800 nm) hergestellt werden. Visuelle Hologramme umfassen alle Hologramme, die nach dem Fachmann bekannten Verfahren aufgezeichnet werden können, darunter fallen unter anderem In-Line (Gabor) Hologramme, Off-Axis Hologramme, Full-Aperture Transfer Hologramme, Weißlicht-Transmissionshologramme ("Regenbogenhologramme"), Denisyukhologramme, Off Axis Reflektionshologramme, Edge-Lit Hologramme sowie Holographische Stereogramme, bevorzugt sind Reflexionshologramme, Denisyukhologramme, Transmissionshologramme. Bevorzugt sind optische Elemente wie Linsen, Spiegel, Umlenkspiegel, Filter, Streuscheiben, Beugungselemente, Lichtleiter, Lichtlenker (waveguides), Projektionsscheiben und/oder Masken haben. Häufig zeigen diese optischen Elemente eine Frequenzselektivität je nachdem wie die Hologramme belichtet wurden und welche Dimensionen das Holgramm hat.

Zudem können mittels der holographischen Filme auch holographische Bilder oder Darstellungen hergestellt werden, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendung dar.

<u>**Beispiel:**</u>

Die Erfindung wird im Folgenden anhand von Beispielen näher erläutert.

<u>**Bezeichnungen die im folgenden Verwendung finden:**</u>

Photopolymer-Formulierungen umfassend:

- Dreidimensional vernetzte Matrixpolymere A). Besonders bevorzugt sind solche dreidimensional vernetzte organische Polymere, welche als Vorstufen aus

    - o einer Isocyanatkomponente a)

    - o und einer Isocyanat-reaktiven Komponente b) aufgebaut sind und

    - o mit Hilfe einer Katalysator Komponente E) vernetzt werden, der in der Regel in Lösung zugegeben wird,

- Schreibmonomere B), die unter Einwirkung aktinischer Strahlung mit ethylenisch ungesättigten Verbindungen unter Polymerisation reagierende Gruppen (strahlenhärtende Gruppen) aufweisen und in dieser Matrix gelöst oder verteilt vorliegen

- wenigstens einen Photoinitiatorsystem C).

- optional eine nicht photopolymerisierbare Komponente D).

- gegebenenfalls Katalysatoren, Radikalstabilisatoren, Lösungsmittel, Additive sowie andere Hilfs- und / oder Zusatzstoffe E)

- F bezeichnet die Photopolymer-Formulierung ohne Photoinitiatorsystem C), die für die Bestimmung des Plateaumoduls $G_0$ verwendet wird.

- M bezeichnet den holographischen Film aus der entsprechenden Photopolymer-Formulierung F, der aber mit dem entsprechenden Photoinitiatorsystem C) für den sichtbaren Bereich hergestellt wurde.

**Messmethoden:**

Sofern nicht abweichend vermerkt beziehen sich alle Prozentangaben auf Gewichtsprozent.

Die angegebenen OH-Zahlen wurden gemäß DIN 53240-2 bestimmt.

Die angegebenen NCO-Werte (Isocyanat-Gehalte) wurden gemäß DIN EN ISO 11909 bestimmt.

Für die Bestimmung der Viskosität wurde die zu untersuchende Komponente oder Mischung bei 20°C in einem Kegel Platte Messsystem eines Rheometers (Firma Anton Paar Physica Modell MCR 51) aufgetragen. Die Messung wird bei folgenden Bedingungen durchgeführt:

- Messkörper: Kegel CP 25, d = 25mm, Winkel = 1°
- Messspalt als Abstand zwischen Kegel und Platte: 0,047 mm
- Messdauer: 10 sec.
- Bestimmung der Viskosität bei einer Scherrate von 250 1/sec.

**Messung der Brechungsindizes der photopolymerisierbaren Schreibmonomere (Komponente B))**

Der Brechungsindex n in Abhängigkeit von der Wellenlänge der Proben wurde aus den Transmissions- und Reflexionsspektren erhalten. Dazu wurden ca. 100 - 300 um dicke Filme der Proben auf Quarzglasträger aus verdünnter Lösung in Butylacetat aufgeschleudert. Das Transmissions- und Reflexionsspektrum dieses Schichtpaketes wurde mit einem Spektrometer der Firma STEAG ETA-Optik, CD-Measurement System ETA-RT gemessen und danach die Schichtdicke und der spektrale Verlauf von n an die gemessenen Transmissions- und Reflexionsspektren im Bereich von 380 - 850 nm angepasst. Dies geschieht mit der internen Software des Spektrometers und erfordert zusätzlich die Brechungsindexdaten des Quarzglassubstrates, die in einer Blindmessung vorab bestimmt wurden. Die Brechungsindizes für die photopolymerisierbaren Monomere B) beziehen sich auf die Wellenlänge von 405 nm und entsprechen damit $n_D^{20}$.

**Messung der holographischen Eigenschaften DE und Δn der holographischen Medien mittels Zweistrahlinterferenz in Reflexionsanordnung**

Die wie unten beschrieben hergestellten holographischen Medien (Photopolymerfilme) wurden anschließend mittels einer Messanordnung gemäß Figur 1 wie folgt auf ihre holographischen Eigenschaften geprüft:

Zur Messung der holographischen Performance wird die Schutzfolie des holographischen Filmmedien (M) abgezogen und der holographische Film mit der Photopolymerseite auf eine 1 mm dicke Glasplatte geeigneter Länge und Breite mit einer Gummiwalze unter leichtem Druck auflaminiert. Dieser Sandwich aus Glas und Photopolymerfolie kann nun verwendet werden, um die holographischen Performanceparameter DE und Δn zu bestimmen.

Der Strahl eines He-Ne Lasers (Emissionswellenlänge 633 nm) wurde mit Hilfe des Raumfilter (SF) und zusammen mit der Kollimationslinse (CL) in einen parallelen homogenen Strahl umgewandelt. Die finalen Querschnitte des Signal und Referenzstrahls werden durch die Irisblenden (I) festgelegt. Der Durchmesser der Irisblendenöffnung beträgt 0.4 cm. Die polarisationsabhängigen Strahlteiler (PBS) teilen den Laserstrahl in zwei kohärente gleich polarisierte Strahlen. Über die λ/2 Plättchen wurden die Leistung des Referenzstrahls auf 0.5 mW und die Leistung des Signalstrahls auf 0.65 mW eingestellt. Die Leistungen wurden mit den Halbleiterdetektoren (D) bei ausgebauter Probe bestimmt. Der Einfallswinkel ($\alpha_0$) des Referenzstrahls beträgt -21.8°, der Einfallswinkel ($\beta_0$) des Signalstrahls beträgt 41.8°. Die Winkel werden ausgehend von der Probennormale zur Strahlrichtung gemessen. Gemäß Figur 1 hat daher $\alpha_0$ ein negatives Vorzeichen und $\beta_0$ ein positives Vorzeichen. Am Ort der Probe (Medium) erzeugte das Interferenzfeld der zwei überlappenden Strahlen ein Gitter heller und dunkler Streifen die senkrecht zur Winkelhalbierenden der zwei auf die Probe einfallenden Strahlen liegen (Reflexionshologramm). Der Streifenabstand Λ, auch Gitterperiode genannt, im Medium beträgt - 225 nm (der Brechungsindex des Mediums zu ~1.504 angenommen).

Figur 1 zeigt die Geometrie eines Holographic Media Testers (HMT) bei λ = 633 nm (He-Ne Laser): M = Spiegel, S = Verschluss, SF = Raumfilter, CL = Kollimatorlinse, λ/2 = λ/2 Platte, PBS = polarisationsabhängiger Strahlteiler, D = Detektor, I = Irisblende, $\alpha_0$ = -21.8°, $\beta_0$ = 41.8° sind die Einfallswinkel der kohärenten Strahlen außerhalb der Probe (des Mediums) gemessen. RD = Referenzrichtung des Drehtisches.

Mit einem holographischen Versuchsaufbau wie in Figur 1 dargestellt wurden die Beugungseffizienz (DE) der Medien gemessen.

Es wurden auf folgende Weise Hologramme in das Medium geschrieben:

- Beide Shutter (S) sind für die Belichtungszeit *t* geöffnet.

- Danach wurde bei geschlossenen Shuttern (S) dem Medium 5 Minuten Zeit für die Diffusion der noch nicht polymerisierten Schreibmonomere gelassen.

Die geschriebenen Hologramme wurden nun auf folgende Weise ausgelesen. Der Shutter des Signalstrahls blieb geschlossen. Der Shutter des Referenzstrahls war geöffnet. Die Irisblende des Referenzstrahls wurde auf einen Durchmesser < 1 mm geschlossen. Damit erreichte man, dass für alle Drehwinkel ($\Omega$) des Mediums der Strahl immer vollständig im zuvor geschriebenen Hologramm lag. Der Drehtisch überstrich nun computergesteuert den Winkelbereich von $\Omega_{min}$ bis $\Omega_{max}$ mit einer Winkelschrittweite von 0.05°. $\Omega$ wird von der Probennormale zur Referenzrichtung des Drehtisches gemessen. Die Referenzrichtung des Drehtisches ergibt sich dann wenn beim Schreiben des Hologramms der Einfallswinkel des Referenz- und des Signalstrahls betragsmäßig gleich sind also $\alpha_0$ = -31.8° und $\beta_0$ = 31.8° gilt. Dann beträgt $\Omega_{recording}$ = 0°. Für $\alpha_0$ = -21.8° und $\beta_0$ = 41.8° beträgt $\Omega_{recording}$ daher 10°. Allgemein gilt für das Interferenzfeld beim Schreiben ("recording") des Hologramms:

$$\alpha_0 = \theta_0 + \Omega_{recording}.$$

$\theta_0$ ist der Halbwinkel im Laborsystem außerhalb des Mediums und es gilt beim Schreiben des Hologramms:

$$\theta_0 = \frac{\alpha_0 - \beta_0}{2}.$$

In diesem Fall gilt also $\theta_0$ = -31.8°. An jedem angefahrenen Drehwinkel $\Omega$ wurden die Leistungen des in der nullten Ordnung transmittierten Strahls mittels des entsprechenden Detektors D und die Leistungen des in die erste Ordnung abgebeugten Strahls mittels des Detektors D gemessen. Die Beugungseffizienz ergab sich bei jedem angefahrenen Winkel $\Omega$ als der Quotient aus:

$$\eta = \frac{P_D}{P_D + P_T}$$

$P_D$ ist die Leistung im Detektor des abgebeugten Strahls und $P_T$ ist die Leistung im Detektor des transmittierten Strahls.

Mittels des oben beschriebenen Verfahrens wurde die Braggkurve, sie beschreibt den Beugungswirkungsgrad $\eta$ in Abhängigkeit des Drehwinkels $\Omega$ des geschriebenen Hologramms gemessen und in einem Computer gespeichert. Zusätzlich wurde auch die in die nullte Ordnung transmittierte Intensität gegen den Drehwinkel $\Omega$ aufgezeichnet und in einem Computer gespeichert.

Die maximale Beugungseffizienz (DE = $\eta_{max}$) des Hologramms, also sein Spitzenwert, wurde bei $\Omega_{reconstruction}$ ermittelt. Eventuell musste dazu die Position des Detektors des abgebeugten Strahls verändert werden, um diesen maximalen Wert zu bestimmen.

Der Brechungsindexkontrast $\Delta n$ und die Dicke d der Photopolymerschicht wurde nun mittels der Coupled Wave Theorie (siehe; H. Kogelnik, The Bell System Technical Journal, Volume 48, November 1969, Number 9 Seite 2909 - Seite 2947) an die gemessene Braggkurve und den Winkelverlauf der transmittierten Intensität ermittelt. Dabei ist zu beachten, dass wegen der durch die Photopolymerisation auftretenden Dickenschwindung der Streifenabstand Λ' des Hologramms und die Orientierung der Streifen (slant) vom Streifenabstand Λ des Interferenzmusters und dessen Orientierung abweichen kann. Demnach wird auch der Winkel $\alpha_0'$ bzw. der entsprechende Winkel des Drehtisches $\Omega_{reconstruction}$, bei dem maximale Beugungseffizienz erreicht wird von $\alpha_0$ bzw. vom entsprechenden $\Omega_{recording}$ abweichen. Dadurch verändert sich die Bragg-Bedingung. Diese Veränderung wird im Auswerteverfahren berücksichtigt. Das Auswerteverfahren wird im Folgenden beschrieben:

Alle geometrischen Größen, die sich auf das geschriebene Hologramm beziehen und nicht auf das Interferenzmuster werden als gestrichene Größen dargestellt.

Für die Braggkurve $\eta(\Omega)$ eines Reflexionshologramms gilt nach Kogelnik:

$$\eta = \begin{cases} \dfrac{1}{1 - \dfrac{1-(\xi/\nu)^2}{\sin^2\left(\sqrt{\xi^2-\nu^2}\right)}}, \text{ für } \nu^2 - \xi^2 < 0 \\ \dfrac{1}{1 + \dfrac{1-(\xi/\nu)^2}{\sinh^2\left(\sqrt{\nu^2-\xi^2}\right)}}, \text{ für } \nu^2 - \xi^2 \geq 0 \end{cases}$$

mit:

$$\nu = \frac{\pi \cdot \Delta n \cdot d'}{\lambda \cdot \sqrt{|c_s \cdot c_r|}}$$

$$\xi = -\frac{d'}{2 \cdot c_s} \cdot DP$$

$$c_s = \cos(\vartheta') - \cos(\psi') \cdot \frac{\lambda}{n \cdot \Lambda'}$$

$$c_r = \cos(\vartheta')$$

$$DP = \frac{\pi}{\Lambda'} \cdot \left(2 \cdot \cos(\psi' - \vartheta') - \frac{\lambda}{n \cdot \Lambda'}\right)$$

$$\psi' = \frac{\beta' + \alpha'}{2}$$

$$\Lambda' = \frac{\lambda}{2 \cdot n \cdot \cos(\psi' - \alpha')}$$

Beim Auslesen des Hologramms ("reconstruction") gilt wie analog oben dargestellt:

$$\vartheta'_0 = \theta_0 + \Omega$$

$$\sin(\vartheta'_0) = n \cdot \sin(\vartheta')$$

An der Bragg-Bedingung ist das "Dephasing" *DP* = 0. Und es folgt entsprechend:

$$\alpha'_0 = \theta_0 + \Omega_{reconstruction}$$

$$\sin(\alpha'_0) = n \cdot \sin(\alpha')$$

Der noch unbekannt Winkel β' kann aus dem Vergleich der Bragg-Bedingung des Interferenzfeldes beim Schreiben des Hologramms und der Bragg-Bedingung beim Auslesen des Hologramms ermittelt werden unter der Annahme, dass nur Dickenschwindung stattfindet. Dann folgt:

$$\sin(\beta') = \frac{1}{n} \cdot \left[\sin(\alpha_0) + \sin(\beta_0) - \sin(\theta_0 + \Omega_{reconstruction})\right]$$

ν ist die Gitterstärke, ξ ist der Detuning Parameter und ψ' die Orientierung (Slant) des Brechungsindexgitters das geschrieben wurde. α' und β' entsprechen den Winkeln $\alpha_0$ und $\beta_0$ des Interferenzfeldes beim Schreiben des Hologramms, aber im Medium gemessen und für das Gitter des Hologramms gültig (nach Dickenschwindung). n ist der mittlere Brechungsindex des Photopolymers und wurde zu 1.504 gesetzt. λ ist die Wellenlänge des Laserlichts im Vakuum.

Die maximale Beugungseffizienz (DE = $\eta_{max}$) ergibt sich dann für ξ = 0 zu:

$$DE = \tanh^2(\nu) = \tanh^2\left(\frac{\pi \cdot \Delta n \cdot d'}{\lambda \cdot \sqrt{\cos(\alpha') \cdot \cos(\alpha' - 2\psi)}}\right)$$

Figur 2 zeigt die gemessene transmittierte Leistung $P_T$ (rechte *y*-Achse) als durchgezogene Linie gegen das Winkeldetuning ΔΩ aufgetragen, die gemessene Beugungseffizienz η (linke *y*-Achse) als ausgefüllte Kreise gegen das Winkeldetuning ΔΩ aufgetragen (soweit die endliche Größe des Detektors es erlaubte) und die Anpassung der Kogelnik Theorie als gestrichelte Linie (linke *y*-Achse).

Die Messdaten der Beugungseffizienz, die theoretische Braggkurve und die transmittierte Intensität werden wie in Figur 2 gezeigt gegen den zentrierten Drehwinkel $\Delta\Omega \equiv \Omega_{reconstruction} - \Omega = \alpha'_0 - \partial'_0$, auch Winkeldetuning genannt, aufgetragen.

Da DE bekannt ist wird die Form der theoretischen Braggkurve nach Kogelnik nur noch durch die Dicke *d'* der Photopolymerschicht bestimmt. Δn wird über DE für gegebene Dicke *d'* so nachkorrigiert, dass Messung und Theorie von DE immer übereinstimmen. *d'* wird nun solange angepasst bis die Winkelpositionen der ersten Nebenminima der theoretischen Braggkurve mit den Winkelpositionen der ersten Nebenmaxima der transmittierten Intensität übereinstimmen und zudem die volle Breite bei halber Höhe (FWHM) für die theoretische Braggkurve und für die transmittierte Intensität übereinstimmen.

Da die Richtung in der ein Reflexionshologramm bei der Rekonstruktion mittels eines Ω-Scans mitrotiert, der Detektor für das abgebeugte Licht aber nur einen endlichen Winkelbereich erfassen kann, wird die Braggkurve von breiten Hologrammen (kleines *d'*) bei einem Ω-Scan nicht vollständig erfasst, sondern nur der zentrale Bereich, bei geeigneter Detektoipositionierung. Daher wird die zur Braggkurve komplementäre Form der transmittierten Intensität zur Anpassung der Schichtdicke *d'* zusätzlich herangezogen.

Figur 2 zeigt die Darstellung der Braggkurve η nach der Coupled Wave Theorie (gestrichelte Linie), des gemessenen Beugungswirkungsgrades (ausgefüllte Kreise) und der transmittierten Leistung (schwarz durchgezogene Linie) gegen das Winkeldetuning ΔΩ.

Für eine Formulierung wurde diese Prozedur eventuell mehrfach für verschiedene Belichtungszeiten *t* an verschiedenen Medien wiederholt, um festzustellen bei welcher mittleren Energiedosis des einfallenden Laserstrahls beim Schreiben des Hologramms DE in den Sättigungswert übergeht. Die mittlere Energiedosis *E* ergibt sich wie folgt aus

den Leistungen der zwei den Winkeln $\alpha_0$ und $\beta_0$ zugeordneten Teilstrahlen (Referenzstrahl mit $P_r$ = 0.50 mW und Signalstrahl mit $P_s$ = 0.63 mW), der Belichtungszeit t und dem Durchmesser der Irisblende (0.4 cm):

$$E\,(\mathrm{mJ/cm^2}) = \frac{2\cdot\left[P_r + P_s\right]\cdot t\,(\mathrm{s})}{\pi\cdot 0.4^2\ \mathrm{cm}^2}$$

Die Leistungen der Teilstrahlen wurden so angepasst, dass in dem Medium bei den verwendeten Winkeln $\alpha_0$ und $\beta_0$, die gleiche Leistungsdichte erreicht wird.

Als Alternative wurde auch ein dem in Figur 1 dargestellten Aufbau äquivalenter Test mit einem grünen Laser mit der Emissionswellenlänge $\lambda$ im Vakuum von 532 nm durchgeführt. Dabei beträgt $\alpha_0$ = -11.5° und $\beta_0$ = 33.5° und $P_r$ = 1.84 mW und $P_s$ = 2.16 mW.

**Messung des Plateaumoduls Go der Photopolymeren mittels eines Oszillationsrheometers im Rahmen der vorliegenden Erfindung**

Die wie unten beschrieben zusammengesetzte, noch flüssige Formulierung wird in das Platte - Platte Messsystem eines Rheometers (Firma Anton Paar Physica Modell MCR 301 ausgerüstet mit dem Ofenmodel CTD 450 der auf 50°C vorgeheizt war) eingebracht. Dann wird die Aushärtung der Matrix der Photopolymerformulierung über die Zeit unter folgenden Bedingungen gemessen:

- Plattenabstand 250μm.
- Messmodus Oszillation bei einer konstanten Kreisfrequenz $\omega_0$ von 10 rad/s und einer geregelten Deformationsamplitude von 1 %.
- Temperatur 50°C, Normalkraftregelung auf 0 Newton eingestellt
- Aufzeichnung des Speichermoduls G' über der Messzeit bis ein konstanter Wert $G_{max}$ von G' erreicht wurde oder für höchstens 3 Stunden.

Dieser Wert des Moduls wird als der zu bestimmende Plateaumodul $G_0$ aufgefasst. Beispiele für typische Messkurven finden sich in Figur 3.

Figur 3 zeigt den Verlauf der Aushärtung des Matrixnetzwerkes (links) und Prüfung auf Plateauverhalten (G' unabhängig von $\omega$) (rechts).

**<u>Beschreibung der in den Beispielen verwendeten Formulierungsbestandteile:</u>**

**Verwendete Isocyanate (Komponenten a))**

**Komponente a1)** ist ein Produkt der Bayer MaterialScience AG, Leverkusen, DE, Hexandiisocyanat-basiertes Polyisocyanat, Anteil an Iminooxadiazindion mindestens 30 %, NCO-Gehalt: 23,5 %.

**Komponente a2)** ist ein Versuchsprodukt der Bayer MaterialScience AG, Leverkusen, DE, aliphatisches Polyisocyanat auf Basis von Hexandiisocyanat, NCO-Gehalt ca. 20 %.

**Komponente a3)** ist ein Produkt der Bayer MaterialScience AG, Leverkusen, DE, Vollallophanat von Hexandiisocyanat auf Polypropylenglykol mit zahlenmittlerer Molmasse von ca. 280 g/mol, NCO-Gehalt: 16,5-17,3%.

**Komponente a4)** ist ein Handelsprodukt der Bayer MaterialScience AG, Leverkusen, Deutschland, Mischung aus 29,4 mol-% Isocyanurats auf Basis von HDI mit 70,6 mol-% des Urethans aus Poly($\varepsilon$-Caprolacton) der zahlenmittleren Molmasse 650 g/Mol mit HDI, NCO-Gehalt 10,5 - 11,5 %.

**Komponente a5)** ist ein Handelsprodukt der Bayer MaterialScience AG, Leverkusen, Deutschland, aliphatisches Biuret-Typ auf Basis Hexamethylendiisocyanat, NCO-Gehalt: 22,5 - 23,5 %.

**Verwendete isocyanatreaktiven Komponenten (Komponente b))**

**Polyol b1)** ist ein experimentelles Produkt der Bayer MaterialScience AG, Leverkusen, Deutschland, die Herstellung ist unten beschrieben.

**Polyol b2)** ist ein experimentelles Produkt der Bayer MaterialScience AG, Leverkusen, Deutschland, die Herstellung ist unten beschrieben.

**Polyol b3)** ist ein experimentelles Produkt der Bayer MaterialScience AG, Leverkusen, DE, die Herstellung ist unten beschrieben.

**Polyol b4)** ist ein experimentelles Produkt der Bayer MaterialScience AG, Leverkusen, Deutschland, die Herstellung ist unten beschrieben.

**Verwendeter Katalysator (Komponente E))**

**Komponente E1):** Urethanisierungskatalysator, Dimethylbis[(1-oxoneodecl)oxy]stannan, Handelsprodukt der Fa. Momentive Performance Chemicals, Wilton, CT, USA.

**Verwendete strahlenhärtende Verbindungen (Komponente B))**

**Komponente B1)** ist ein experimentelles Produkt der Bayer MaterialScience AG, Leverkusen, Deutschland, die Herstellung ist unten beschrieben.

**Komponente B2)** ist ein experimentelles Produkt der Bayer MaterialScience AG, Leverkusen, Deutschland, die Herstellung ist unten beschrieben.

**Komponente B3)** ist ein experimentelles Produkt der Bayer MaterialScience AG, Leverkusen, Deutschland, die Herstellung ist unten beschrieben.

**Verwendete Photoinitiatorsysteme (Komponente C))**

Coinitiator 1: Tetrabutylammonium-tris(3-chlor-4-methylphenyl)(hexyl)borat, [1147315-11-4]) ist ein von der Ciba Inc., Basel, Schweiz, hergestelltes Versuchsprodukt.

Farbstoff 1 ist Neu Methylenblau (CAS 1934-16-3) und wurde von SIGMA-ALDRICH CHEMIE GmbH, Steinlzeim, Deutschland bezogen.

Farbstoff 2 ist Safranin O (CAS 477-73-6) und wurde von SIGMA-ALDRICH CHEMIE GmbH, Steinheim, Deutschland bezogen.

Farbstoff 3 ist Ethylviolett (CAS 2390-59-2) und wurde in 80%-iger Reinheit von SIGMA-ALDRICH CHEMIE GmbH, Steinheim, Deutschland bezogen und so eingesetzt.

Farbstoff 4 ist Astrazon Orange G (CAS 3056-93-7) und wurde von SIGMA-ALDRICH CHEMIE GmbH, Steinheim, Deutschland bezogen.

Beschreibung der **Komponente C1**):

In einem Becherglas werden im Dunkeln oder unter geeigneter Beleuchtung 0.05 g Farbstoff 1, 0.05 g Farbstoff 3, 0.05 g Farbstoff 4 und 1.50 g Coninitiator 1 in 3.50 g N-Ethylpyrolidon gelöst. Von dieser Lösung werden die entsprechenden Gewichtsprozente zur Erstellung der Beispielmedien verwendet.

Beschreibung der **Komponente C2**):

In einem Becherglas werden im Dunkeln oder unter geeigneter Beleuchtung 0.05 g Farbstoff 1, 0.05 g Farbstoff 2, 0.05 g Farbstoff 4 und 1.50 gr Coinitiator 1 in 3.50 g N-Ethylpyrolidon gelöst. Von dieser Lösung werden die entsprechenden Gewichtsprozente zur Erstellung der Beispielmedien verwendet.

**Verwendete nicht photopolymerisierbare Komponenten (Komponente D)**

Beschreibung von **Komponente D1**) Bis(2,2,3,3,4,4,5,5,6,6,7,7-dodecafluorheptyl)-(2,2,4-trimethylhexan-1,6-diyl)biscarbamat

In einem 50 mL Rundkolben wurden 0.02 g Desmorapid Z und 3.6 g 2,4,4-Trimethylhexane-1,6-diisocyanat (TMDI) vorgelegt und auf 60 °C erwärmt. Anschließend wurden 11.9 g 2,2,3,3,4,4,5,5,6,6,7,7-Dodecafluorheptan-1-ol zugetropft und die Mischung weiter auf 60 °C gehalten, bis der Isocyanatgehalt unter 0.1 % gesunken war. Danach wurde abgekühlt. Das Produkt wurde als farbloses Öl erhalten.

Beschreibung von **Komponente D2**) 2,2,3,3,4,4,5,5,6,6,7,7,8,8,9,9-Hexadecafluornonylbutylcarbamat

In einem 1 L Rundkolben wurden 0.50 g Desmorapid Z und 186 g n-Butylisocyanat vorgelegt und auf 60 °C erwärmt. Anschließend wurden 813 g 2,2,3,3,4,4,5,5,6,6,7,7,8,8,9,9-Hexadecafluornonanol zugetropft und die Mischung weiter auf 60 °C gehalten, bis der Isocyanatgehalt unter 0.1 % gesunken war. Danach wurde abgekühlt. Das Produkt

wurde als farbloses Öl erhalten.

**Sonstige Einsatzstoffe:**

DMC-Katalysator: Doppelmetallcyanid-Katalysator auf Basis Zinkhexacyanocobaltat (III), erhältlich nach dem in EP-A 700 949 beschriebenen Verfahren.

Irganox 1076 ist Octadecyl 3,5-di-(tert)-butyl-4-hydroxyhydrocinnamate (CAS 2082-79-3).

Byk® 310: silikonbasiertes Oberflächenadditiv der Firma BYK-Chemie GmbH, Wesel, 25%ige Lösung in Xylol.

**Herstellung der Komponenten:**

**Herstellung von Polyol b1):**

In einen mit Rührwerk ausgestatteten 20 1 - Reaktionskessel wurden 3,621 kg eines difunktionellen Polytetrahydrofuranpolyetherpolyols (Equivalentgewicht 500 g/Mol OH) eingewogen und 525 mg DMC-Katalysator zugegeben. Dann wurde unter Rühren bei ca. 70 U/min. auf 105 °C erhitzt. Durch dreimaliges Anlegen von Vakuum und Entspannen mit Stickstoff wurde Luft gegen Stickstoff ausgetauscht. Nach Erhöhung der Rührerdrehzahl auf 300 U/min.wurde für 54 Minuten bei laufender Vakuumpumpe und einem Druck von etwa 0,1 bar von unten Stickstoff durch die Mischung geleitet. Danach wurden mittels Stickstoff ein Druck von 0,2 bar eingestellt und 363 g Propylenoxid (PO) zum Start der Polymerisation eingeleitet. Hierbei stieg der Druck auf 2,42 bar. Nach 7 Minuten war der Druck wieder auf 0,34 bar abgefallen und es wurden über einen Zeitraum von 2h 29 min. weitere 11,379 kg PO bei 2,9 bar eindosiert. 47 Minuten nach Ende der PO-Dosierung wurde bei einem Restdruck von 1,9 bar Vakuum angelegt und vollständig entgast. Der Produkt wurde durch Zugabe von 7,5 g Irganox 1076 stabilisiert und als farblose, viskose Flüssigkeit erhalten (OH-Zahl: 27,6 mg KOH/g, Viskosität bei 25 °C: 1498 mPas).

**Herstellung von Polyol b2):**

In einen mit Rührwerk ausgestatteten 20 1 - Reaktionskessel wurden 2475 g eines difunktionellen Polytetrahydrofuranpolyetherpolyols (Equivalentgewicht 325 g/Mol OH) eingewogen und 452,6 mg DMC-Katalysator zugegeben. Dann wurde unter Rühren bei ca. 70 U/min. auf 105 °C erhitzt. Durch dreimaliges Anlegen von Vakuum und Entspannen mit Stickstoff wurde Luft gegen Stickstoff ausgetauscht. Nach Erhöhung der Rührerdrehzahl auf 300 U/min.wurde für 57 Minuten bei laufender Vakuumpumpe und einem Druck von etwa 0,1 bar von unten Stickstoff durch die Mischung geleitet. Danach wurden mittels Stickstoff ein Druck von 0,5 bar eingestellt und 100 g Ethylenoxid (EO) und 150 g PO parallel zum Start der Polymerisation eingeleitet. Hierbei stieg der Druck auf 2,07 bar. Nach 10 Minuten war der Druck wieder auf 0,68 bar abgefallen und es wurden über einen Zeitraum von 1h 53 min. weitere 5,116 kg EO und 7,558 kg PO als Gemisch bei 2,34 bar zugeleitet. 31 Minuten nach Ende der Epoxiddosierung wurde bei einem Restdruck von 2,16 bar Vakuum angelegt und vollständig entgast. Der Produkt wurde durch Zugabe von 7,5 g Irganox 1076 stabilisiert und als leicht trübe, viskose Flüssigkeit erhalten (OH-Zahl 27,1 mg KOH/g, Viskosität bei 25 °C: 1636 mPas).

**Herstellung von Polyol b3):**

In einem 1 L Kolben wurden 0.18 g Zinnoktoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

**Herstellung von Polyol b4):**

In einen mit Rührwerk ausgestatteten 20 1 - Reaktionskessel wurden 2465 g eines difunktionellen Polytetrahydrofuranpolyetherpolyols (Equivalentgewicht 325 g/Mol OH) eingewogen und 450,5 mg DMC-Katalysator zugegeben. Dann wurde unter Rühren bei ca. 70 U/min. auf 105 °C erhitzt. Durch dreimaliges Anlegen von Vakuum und Entspannen mit Stickstoff wurde Luft gegen Stickstoff ausgetauscht. Nach Erhöhung der Rührerdrehzahl auf 300 U/min.wurde für 72 Minuten bei laufender Vakuumpumpe und einem Druck von etwa 0,1 bar von unten Stickstoff durch die Mischung geleitet. Danach wurden mittels Stickstoff ein Druck von 0,3 bar eingestellt und 242 g Propylenoxid (PO) zum Start der Polymerisation eingeleitet. Hierbei stieg der Druck auf 2,03 bar. Nach 8 Minuten war der Druck wieder auf 0,5 bar abgefallen und es wurden über einen Zeitraum von 2h 11 min. weitere 12,538 kg PO bei 2,34 bar eindosiert. 17 Minuten nach Ende der PO-Dosierung wurde bei einem Restdruck von 1,29 bar Vakuum angelegt und vollständig entgast. Der Produkt wurde durch Zugabe von 7,5 g Irganox 1076 stabilisiert und als farblose, viskose Flüssigkeit erhalten (OH-Zahl:

27,8 mg KOH/g, Viskosität bei 25 °C: 1165 mPas).

**Herstellung der Komponente B1), (Phosphorthioyltris(oxy-4,1-phenyleniminocarbonyloxyethan-2,1-diyl)-triacrylat):**

In einem 500 mL Rundkolben wurden 0.1 g 2,6-Di-tert.-butyl-4-methylphenol, 0.05 g Dibutylzinndilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt. Das Produkt wurde als teilkristalliner Feststoff erhalten. $n_D^{20}$: 1,610.

**Herstellung des Komponente B2), 2-({[3-(Methylsulfanyl)phenyl]carbamoyl}oxy)ethylprop-2-enoat):**

In einem 100 mL Rundkolben wurden 0.02 g 2,6-Di-tert.-butyl-4-methylphenol, 0.01 g Desmorapid® Z, 11.7 g 3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0.1 % gesunken war. Danach wurde abgekühlt. Das Produkt wurde als hellgelbe Flüssigkeit erhalten. $n_D^{20}$: 1,626.

**Herstellung des Komponente B3), (Mischung aus (4-Methylbenzol-1,3-diyl)bis[carbamoyloxy-3-(biphenyl-2-yloxy)propan-2,1-diyl]bisacrylat und (4-Methylbenzol-1,3-diyl)bis[carbamoyloxy-3-(biphenyl-2-yloxy)propan-1,2-diyl]bisacrylat und analoger Isomere):**

430,2g Denacol EX 142 (Nagase-Chemtex, Japan), 129,7g Acrylsäure, 1,18g Triphenylphosphin und 0,0056g 2,6-Di-t.-butyl-4-methylphenol wurden in einem Dreihalskolben mit Rückflusskühler und Rührwerk vorgelegt. Zudem wurde Luft langsam durchgeleitet und auf 60 °C temperiert. Anschließend wird für 24 Stunden bei 90 °C gerührt. Man erhielt eine klare Flüssigkeit mit OHZ=157,8 mg KOH/g. 21,3g dieses Zwischenprodukts und 5,2g eines Gemischs aus 2,4 und 2,6-Toluidendiisocyanat (Desmodur T80, Bayer MaterialScience AG, Leverkusen, Germany) wurden in einem Dreihalskolben mit Rückflusskühler und Rührwerk vorgelegt. Zudem wurde Luft langsam durchgeleitet und auf 60 °C temperiert. Nach anfänglicher Exothermie das Produkt für 24 Stunden bei 60 °C gerührt. Es wurde ein klares, farbloses, gläsernes Produkt mit NCO = 0% erhalten. $n_D^{20}$: 1,643.

**Herstellung der Proben und Beispielmedien:**

**Herstellung der Photopolymerformulierung (F) ohne Photoinitiator C) zur Bestimmung des Plateaumoduls $G_0$ der Photopolymeren.**

Zur Herstellung der Photopolymer-Formulierung zur Bestimmung des Moduls $G_0$ werden die verschiedenen Schreibmonomere (Komponenten B), sowie gegebenenfalls Additive (Teile der Komponente E) in der isocyanatreaktiven Komponente b) (als Teil der Komponente A) gegebenenfalls bei 60 °C gelöst. Gegebenenfalls wird maximal 10 Minuten im Trockenschrank auf 60 °C erhitzt. Dann wird Isocyanat Komponente a) (anderer Teil der Komponente A) zugegeben und im Speedmixer 1 Minute gemischt. Im Folgenden wird eine Lösung der Komponente E1) in Butylacetat zugegeben und im Speedmixer erneut 1 Minute gemischt (weitere Teile der Komponente E). Die Konzentration der Komponente E1) in Butylacetat beträgt 10 Gewichtsprozent. Von dieser Lösung wurden die in Tabelle 2 beschriebenen Mengen eingesetzt.

Tabelle 2 listet die so hergestellten, untersuchten Beispiele der Photopolymerformullerungen ohne Photoinitiatorsystem C) zur Bestimmung des Plateaumoduls $G_0$ der Photopolymeren auf.

Tabelle 2:

| Photopolymer Formulierung ohne Initiator | Isocyanat Komponente | Anteil (g) | isocyanatreaktive Komponente | Anteil (g) | NCO : OH | Photopolymerisierbares Monomer 1 | Anteil (Gew. %) | Photopolymerisierbares Monomer 2 | Anteil (Gew. %) | Nicht photopolymerisierbare Komponente | Anteil (Gew. %) | Katalysator in Lösung (Butylacetat) | Anteil (g) |
|---|---|---|---|---|---|---|---|---|---|---|---|---|---|
| F 1 | a1 | 0.366 | b1 | 4.121 | 1.02 : 1 | B1 | 15.0 | B2 | 15.0 | D1 | 25.0 | E1 | 0.0300 |
| F 2 | a2 | 0.573 | b4 | 5.414 | 1.02 : 1 | B1 | 20.0 | B2 | 20.0 | | | E1 | 0.0300 |
| F 3 | a1 | 0.706 | b3 | 3.781 | 1.02 : 1 | B1 | 15.0 | B2 | 15.0 | D1 | 25.0 | E1 | 0.0300 |
| F 4 | a3 | 0.496 | b4 | 3.991 | 1.02 : 1 | B1 | 15.0 | B2 | 15.0 | D2 | 25.0 | E1 | 0.0300 |
| F 5 | a3 | 0.534 | b2 | 3.950 | 1.02 : 1 | B1 | 15.0 | B2 | 15.0 | D1 | 25.0 | E1 | 0.0300 |
| F 6 | a3 | 0.534 | b2 | 3.950 | 1.02 : 1 | B1 | 15.0 | B2 | 15.0 | D2 | 25.0 | E1 | 0.0300 |
| F 7 | a4 | 0.757 | b2 | 3.730 | 1.02 : 1 | B1 | 15.0 | B2 | 15.0 | D1 | 25.0 | E1 | 0.0300 |
| F 8 | a4 | 0.757 | b2 | 3.730 | 1.02 : 1 | B1 | 25.0 | B2 | 15.0 | D1 | 15.0 | E1 | 0.0300 |
| F 9 | a5 | 0.370 | b2 | 4.117 | 1.02 : 1 | B1 | 25.0 | B2 | 15.0 | D1 | 15.0 | E1 | 0.0300 |
| F 10 | a1 | 0.706 | b3 | 3.781 | 1.02 : 1 | B3 | 15.0 | B2 | 15.0 | D1 | 25.0 | E1 | 0.0300 |
| F 11 | a3 | 0.534 | b2 | 3.950 | 1.02 : 1 | B3 | 15.0 | B2 | 15.0 | D1 | 25.0 | E1 | 0.0300 |

**Beispielhafte Herstellung der holographischen Filmmedien (M) basierend auf Photopolymer-Formulierungen mit Photoinitiatator zur Bestimmung des Performance Parameters Δn.**

Zur Herstellung der Photopolymer-Formulierung werden die Komponenten Polyol (Komponente b)) schrittweise mit den photopolymerisierbaren Schreibmonomeren (Komponente B1) + B2)), optional mit den nicht polymerisierbaren Komponenten D) sowie dem Uretahnisierungskatalysator (Komponente E1)) in N-Ethylpyrrolidon (10 Gew.%) gelöst, danach wird Byk® 310 (Teil der Komponente E)) zugesetzt und gemischt. Anschließend wird eine Lösung der Komponente C) der Photopolymerlösung im Dunklen hinzugefügt und vermischt, so dass eine klare Lösung erhalten wurde. Gegebenenfalls kann die Formulierung für kurze Zeit bei 60°C erwärmt werden, um die Löslichkeit der Einsatzstoffe zu unterstützen. Zuletzt wird bei 30°C die entsprechende Isocyanat Komponente a) zugegeben und erneut gemischt. Die erhaltene, flüssige Masse wird dann mittels Rakel oder Schlitzdüse auf eine 36 μm dicke Polyethylenterephthalatfolie appliziert, und für 4,5 Minuten bei einer Trocknungstemperatur von 80°C in einem Umlufttrockner getrocknet. Anschließend wird die Photopolymerschicht mit einer 40 μm dicken Polyethylenfolie abgedeckt und aufgewickelt.

Die gewünschte Zielschichtdicke der getrockneten Photopolymere liegen vorzugsweise zwischen 10 bis 20 μm..

Die Herstellgeschwindigkeiten liegen bevorzugt im Bereich von 0,2 m/min bis 300 m/min und besonders bevorzugt im Bereich vom 1,0 m/min bis 50 m/min.

Tabelle 3 listet die untersuchten Beispiele der Photopolymer-Formulierungen, die für die kontinuierliche Herstellung von holographischen Filmen eingesetzt werden, in ihrer Zusammensetzung auf.

Tabelle 3:

| holographisches Medium | Isocyanat Komponente | Anteil (g) | isocyanatreaktive Komponente | Anteil (g) | NCO : OH | Photopolymerisierbares Monomer 1 | Anteil (Gew. %) | Photopolymerisierbares Monomer 2 | Anteil (Gew. %) | Nicht photopolymerisierbare Komponente | Anteil (Gew. %) | Photoinitiator | Anteil (g) | BYK 310 | Anteil (g) | Katalysator in Lösung | Anteil (g) | Entspricht Formulierung ohne Initiator |
|---|---|---|---|---|---|---|---|---|---|---|---|---|---|---|---|---|---|---|
| M 1 | a1 | 0.647 | b1 | 7.213 | 1.02 : 1 | B1 | 15.0 | B2 | 15.0 | D1 | 25.0 | C2 | 1.040 | X | 0.060 | E1 | 0.040 | F 1 |
| M 2 | a2 | 1.053 | b4 | 9.847 | 1.02 : 1 | B1 | 20.0 | B2 | 20.0 | | | C1 | 0.940 | X | 0.060 | E1 | 0.100 | F 2 |
| M 3 | a1 | 1.231 | b3 | 6.647 | 1.02 : 1 | B1 | 15.0 | B2 | 15.0 | D1 | 25.0 | C1 | 1.042 | X | 0.060 | E1 | 0.020 | F 3 |
| M 4 | a3 | 0.905 | b4 | 6.985 | 1.02 : 1 | B1 | 15.0 | B2 | 15.0 | D2 | 25.0 | C1 | 1.012 | X | 0.060 | E1 | 0.038 | F 4 |
| M 5 | a3 | 0.940 | b2 | 6.950 | 1.02 : 1 | B1 | 15.0 | B2 | 15.0 | D1 | 25.0 | C1 | 1.022 | X | 0.060 | E1 | 0.038 | F 5 |
| M 6 | a3 | 0.940 | b2 | 6.950 | 1.02 : 1 | B1 | 15.0 | B2 | 15.0 | D2 | 25.0 | C1 | 1.010 | X | 0.060 | E1 | 0.040 | F 6 |
| M 7 | a4 | 1.387 | b2 | 6.453 | 1.02 : 1 | B1 | 15.0 | B2 | 15.0 | D1 | 25.0 | C2 | 1.060 | X | 0.060 | E1 | 0.040 | F 7 |
| M 8 | a4 | 1.387 | b2 | 6.453 | 1.02 : 1 | B1 | 25.0 | B2 | 15.0 | D1 | 15.0 | C2 | 1.060 | X | 0.060 | E1 | 0.040 | F 8 |
| M 9 | a5 | 0.682 | b2 | 7.158 | 1.02 : 1 | B1 | 25.0 | B2 | 15.0 | D1 | 15.0 | C2 | 1.060 | X | 0.060 | E1 | 0.040 | F 9 |
| M 10 | a1 | 1.231 | b3 | 6.647 | 1.02 : 1 | B3 | 15.0 | B2 | 15.0 | D1 | 25.0 | C2 | 1.060 | X | 0.060 | E1 | 0.040 | F10 |
| M 11 | a3 | 0.940 | b2 | 6.950 | 1.02 : 1 | B3 | 15.0 | B2 | 15.0 | D1 | 25.0 | C2 | 1.060 | X | 0.060 | E1 | 0.040 | F11 |

**Ergebnisse aus $G_0$, Wickelfähigkeit und $\Delta n$ kombiniert.**

Folgende Messwerte für $G_0$ (MPa), der Qualität der Wickelfähigkeit und von $\Delta n$ bei der Dosis E (mJ-/cm$^2$) wurden erhalten und sind in Tabelle 4 dargestellt. Dabei gilt das die mit * gekennzeichneten Werte von $\Delta n$ statt mit $\lambda$ = 633 nm mit $\lambda$ = 532 nm gemessen.

Tabelle 4:

| Beispiel Typ | Holographische Medium | Δn | Entspricht Formulierung ohne Initiator | Gewichtsanteil (%) der Komponenten B an der Gesamtformulierung | $G_0$ | E | Wickelfähigkeit |
|---|---|---|---|---|---|---|---|
| Gegenbeispiel 1 | M 1 | 0.033* | F 1 | 30,0 | 0,025 | 16 - 128 | - |
| Gegenbeispiel 2 | M 2 | 0,026 | F 2 | 40,0 | 0,007 | 9 - 36 | -- |
| Beispiel 1 | M 3 | 0,034 | F 3 | 30,0 | 0,489 | 9 - 36 | ++ |
| Beispiel 2 | M 4 | 0.027* | F 4 | 30,0 | 0,031 | 16 - 128 | + |
| Beispiel 3 | M 5 | 0.031* | F 5 | 30,0 | 0,090 | 16 - 128 | + |
| Beispiel 4 | M 6 | 0,033 | F 6 | 30,0 | 0,085 | 9 - 36 | + |
| Beispiel 5 | M 7 | 0,036 | F 7 | 30,0 | 0,052 | 9 - 36 | + |
| Beispiel 6 | M 8 | 0,036 | F 8 | 40,0 | 0,049 | 9 - 36 | + |
| Beispiel 7 | M 9 | 0,034 | F 9 | 40,0 | 0,034 | 9 - 36 | + |
| Beispiel 8 | M 10 | 0,037 | F 10 | 30,0 | 0,242 | 9 - 36 | ++ |
| Beispiel 9 | M 11 | 0,034 | F 11 | 30,0 | 0,044 | 9 - 36 | + |

Es ergibt sich eine gute Block- und Wickelfähigkeit bei Werten von $G_0$ > 0,03 MPa. $G_0$ sollte bevorzugt > 0,05 MPa betragen und ganz besonders bevorzugt > 0,1 MPa.

Für die Bewertung der Wickelfähigkeit sind zwei Merkmale beim fertigen Produkt zu beurteilen. Zum Einen wird die Homogenität der Photopolymerschichtdicke visuell bewertet. Die Randbereiche des Photopolymers in Laufrichtung der Bahn sind hierbei besonders auffällig und gut zu beurteilen. Hier können zumeist leichte Unebenheiten in den Schichtdicken durch die Einfärbung des Photopolymers beobachtet werden, die durch eine Verschiebung des Materials bei Druckaufgabe durch die Schutzfolie entstehen können.

Als weiterer Aspekt wird die Klebrigkeit der Photopolymerschicht bewertet. Bei dieser Beurteilung wird die Schutzfolie von dem Photopolymer abgezogen. Während des Vorgangs kann über die aufgebrachte Kraft zum Abziehen und der Beobachtung der Grenzfläche zwischen Photopolymer und Schutzfolie die Klebrigkeit empirisch ermittelt werden. Hierbei ist die mögliche Zerstörung des Photopolymer beim Abziehen ein besonders starkes Anzeichen für eine sehr gute Haftung zwischen Photopolymer und Schutzfolie, das wiederum durch eine zu geringe Blockfestigkeit des Polymers hervorgerufen wird.

Im Folgenden werden die Bewertungen der einzelnen Qualitäten der Wickelfähigkeit erläutert:

+ + keine Verschiebung der Schichtdicken, sehr lockeres Ablösen der Schutzfolie ohne Störungen im Film

+ keine Verschiebung der Schichtdicken, leichtes Ablösen der Schutzfolie ohne Störungen im Film

- leichte Schichtdickenvariation im Randbereich, schweres Abziehen der Schutzfolie ohne Zerstörung der Oberfläche

-- signifikante Schichtdickenvariationen im Randbereich, starkes "ausfransen" des Beschichtungsrandes, schweres Abziehen der Schutzfolie mit auftretenden Störungen im Photopolymer

## Patentansprüche

**1.** Verfahren zur Herstellung eines holographischen Films, bei dem

i) eine Photopolymer-Formulierung umfassend

A) Matrixpolymere als amorphes Netzwerk
B) eine Kombination eines monofunktionellen Schreibmonomers und eines multifunktionellen Schreibmonomers
C) ein Photointiatorsystem
D) optional eine nicht photopolymerisierbare Komponente
E) gegebenenfalls Katalysatoren, Radikalstabilisatoren, Lösungsmittel,
Additive sowie andere Hilfs- und / oder Zusatzstoffe bereit gestellt,

ii) die Photopolymer-Formulierung als Film flächig auf ein Substrat aufgebracht und
iii) der Film getrocknet wird,
**dadurch gekennzeichnet, dass** eine Photopolymer-Formulierung mit einen Plateaumodul $G_0$ von $\geq$ 0,03 MPa verwendet wird.

**2.** Verfahren nach Anspruch 1, **dadurch gekennzeichnet, dass** eine Photopolymer-Formulierung mit einen Plateaumodul von $\geq$ 0,03 MPa und $\leq$ 1 MPa, bevorzugt von $\geq$ 0,05 MPa und $\leq$ 1 MPa, besonders bevorzugt von $\geq$ 0,1 MPa und $\leq$ 1 MPa und insbesondere bevorzugt von $\geq$ 0,1 MPa und $\leq$ 0,6 MPa verwendet wird.

**3.** Verfahren nach einem der Ansprüche 1 oder 2, **dadurch gekennzeichnet, dass** nach dem Trocknen im Schritt iii) auf den Film eine Kaschierfolie aufgebracht wird.

**4.** Verfahren nach Anspruch 3, **dadurch gekennzeichnet, dass** der Film zusammen mit der Kaschierfolie aufgerollt wird.

**5.** Verfahren nach einem der Ansprüche 1 bis 4, **dadurch gekennzeichnet, dass** der Plateaumodul der Photopolymer-Formulierung bestimmt wird, indem in einem Oszillationsrheometer die Aushärtung der Matrix wie folgt gemessen wird:

- Messmodus Oszillation bei einer konstanten Kreisfrequenz $\omega_0$ von 10 rad/s und einer geregelten Deformationsamplitude von 1%.
- Temperatur 50°C, Normalkraftregelung auf 0 Newton eingestellt
- Aufzeichnung des Speichermoduls G' über der Messzeit bis ein konstanter Wert $G_{max}$ von G' erreicht wurde oder für höchstens 3 Stunden. Dieser Wert wird als Plateaumodul $G_0$ genommen.

**6.** Verfahren nach einem der Ansprüche 1 bis 5, **dadurch gekennzeichnet, dass** die Matrixpolymere Polyurethane sind.

**7.** Verfahren nach einem der Ansprüche 1 bis 6, **dadurch gekennzeichnet, dass** die Schreibmonomere Acrylate und / oder Meth(acrylate) sind.

**8.** Verfahren nach Anspruch 7, **dadurch gekennzeichnet, dass** als Schreibmonomere eine Kombination aus einem monofunktionellen und einem multifunktionellen Schreibmonomer verwendet wird.

**9.** Verfahren nach Anspruch 8, **dadurch gekennzeichnet, dass** das monofunktionelle Schreibmonomer die allgemeine Formel (III)

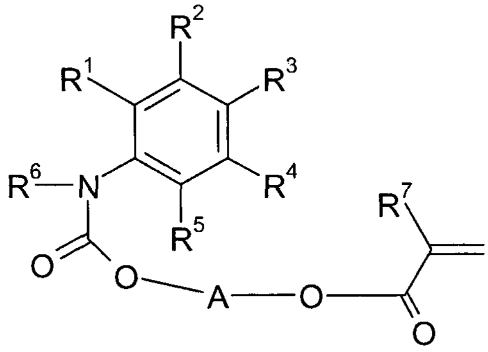

(III)

hat, in der $R^1$, $R^2$, $R^3$, $R^4$, $R^5$ jeweils unabhängig voneinander ein Wasserstoff- oder Halogenatom oder eine C1-C6-Alkyl-, Trifluormethyl-, C1-C6-Alkylthio-, C1-C6-Alkylseleno-, C1-C6-Alkyltelluro- oder Nitro-Gruppe sind, mit der Maßgabe dass wenigstens ein Substituent der Gruppe $R^1$, $R^2$, $R^3$, $R^4$, $R^5$ nicht Wasserstoff ist, $R^6$, $R^7$ jeweils für sich Wasserstoff oder eine C1-C6-Alkylgruppe sind und A ein gesättigter oder ungesättigter oder linearer oder verzweigter C1-C6-Alkyl-Rest oder ein Polyethylenoxid-Rest oder ein Polypropylenoxid-Rest mit jeweils 2-6 Wiederholungseinheiten in der Polymerkette ist, und das monofunktionelle Schreibmonomer bevorzugt eine Glastemperatur $T_G$ < 0°C und bevorzugt einen Brechungsindex >1.50 bei 405 nm aufweist.

**10.** Verfahren nach einem der Ansprüche 8 oder 9, **dadurch gekennzeichnet, dass** das multifunktionelle Schreibmonomer die allgemeine Formel (IV)

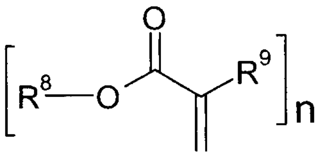

(IV)

hat, in der n≥2 und n≤4 ist und $R^8$, $R^9$ Wasserstoff und / oder unabhängig voneinander lineare, verzweigte, cyclische oder heterocyclische unsubstituierte oder gegebenenfalls auch mit Heteroatomen substituierte organische Reste sind und das multifunktionelle Schreibmonomer bevorzugt einen Brechungsindex >1.50 bei 405 nm aufweist.

**11.** Verfahren nach einem der Ansprüche 1 bis 10, **dadurch gekennzeichnet, dass** die Photopolymer-Formulierung als Weichmacher Urethane enthält, wobei die Urethane bevorzugt mit wenigstens einem Fluoratom substituiert sind.

**12.** Verfahren nach Anspruch 11, **dadurch gekennzeichnet, dass** als Weichmacher Urethane der allgemeinen Formel (V)

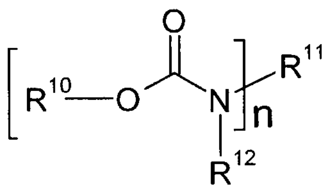

(V)

verwendet werden, bei denen n≥1 und n≤8 ist und $R^{10}$, $R^{11}$, $R^{12}$ Wasserstoff und / oder unabhängig voneinander lineare, verzweigte, cyclische oder heterocyclische unsubstituierte oder gegebenenfalls auch mit Heteroatomen substituierte organische Reste sind, wobei bevorzugt mindestens einer der Reste $R^{10}$, $R^{11}$, $R^{12}$ mit wenigstens einem Fluoratom substituiert ist und besonders bevorzugt $R^{10}$ ein organischer Rest mit mindestens einem Fluoratom ist.

**13.** Verfahren nach einem der Ansprüche 1 bis 12 **dadurch gekennzeichnet, dass** das Photoinitiatorsystem einen anionischen, kationischen oder neutralen Farbstoff und einen Coinitiator umfasst.

**14.** Holographisches Medium, erhältlich nach einem Verfahren gemäß einem der Ansprüche 1 bis 13.

## Claims

**1.** Process for producing holographic films in which

i)photopolymer formulation comprising

A) matrix polymers as amorphous network
B) a combination of a monofunctional writing monomer and of a polyfunctional writing monomer
C) a photoinitiator system
D) optionally a non-photopolymerizable component
E) optionally catalysts, free radical stabilizers, solvents, additives and other auxiliaries and/or additives is provided,

ii) the photopolymer formulation is applied as a film extensively to a substrate and
iii) the film is dried,
**characterized in that** a photopolymer formulation having a plateau modulus $G_0$ of ≥ 0.03 MPa is used.

**2.** Process according to Claim 1, **characterized in that** a photopolymer formulation having a plateau modulus of ≥ 0.03 MPa and ≤ 1 MPa, preferably of ≥ 0.05 MPa and ≤ 1 MPa, particularly preferably of ≥ 0.1 MPa and ≤ 1 MPa and especially preferably of ≥ 0.1 MPa and ≤ 0.6 MPa is used.

**3.** Process according to either of Claims 1 and 2, **characterized in that** a laminating film is applied to the film after the drying in step iii).

**4.** Process according to Claim 3, **characterized in that** the film is rolled up together with the laminating film.

**5.** Process according to any of Claims 1 to 4, **characterized in that** the plateau modulus of the photopolymer formulation is determined by measuring the curing of the matrix in an oscillation rheometer, as follows:

• Oscillation measuring mode at a constant circular frequency $\omega_0$ of 10 rad/s and a regulated deformation amplitude of 1%.
• Temperature 50°C, normal force regulation set at 0 Newton
• Recording of the storage modulus G' over the measuring time up to a constant value $G_{max}$ of G' was reached or for not more than 3 hours. This value is taken as plateau modulus $G_0$.

**6.** Process according to any of Claims 1 to 5, **characterized in that** the matrix polymers are polyurethanes.

**7.** Process according to any of Claims 1 to 6, **characterized in that** the writing monomers are acrylates and/or meth (acrylates).

**8.** Process according to Claim 7, **characterized in that** a combination of a monofunctional and a polyfunctional writing monomer is used as writing monomers.

**9.** Process according to Claim 8, **characterized in that** the monofunctional writing monomer has the general formula (III)

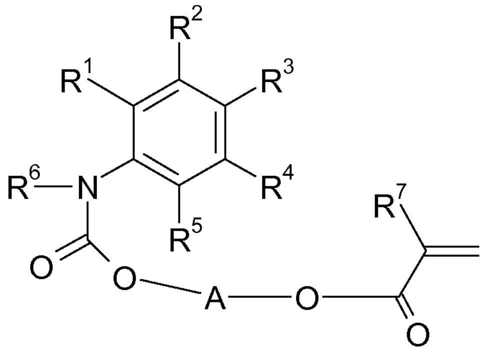

(III)

in which $R^1$, $R^2$, $R^3$, $R^4$, $R^5$, in each case independently of one another, are a hydrogen or halogen atom or a C1-C6-alkyl, trifluoromethyl, C1-C6-alkylthio, C1-C6-alkylseleno, C1-C6-alkyltelluro or nitro group, with the proviso that at least one substituent of the group $R^1$, $R^2$, $R^3$, $R^4$, $R^5$ is not hydrogen, $R^6$, $R^7$, in each case by themselves, are hydrogen or a C1-C6-alkyl group and A is a saturated or unsaturated or linear or branched C1-C6-alkyl radical or a polyethylene oxide radical or a polypropylene oxide radical having in each case 2-6 repeating units in the polymer chain, and the monofunctional writing monomer preferably has a glass transition temperature $T_G$ of < 0°C and preferably a refractive index of > 1.50 at 405 nm.

10. Process according to either of Claims 8 and 9, **characterized in that** the polyfunctional writing monomer has the general formula (IV)

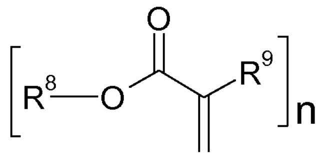

(IV)

in which n is $\geq 2$ and n is $\leq 4$ and $R^8$, $R^9$ are hydrogen and/or, independently of one another, linear, branched, cyclic or heterocyclic organic radicals which are unsubstituted or optionally also substituted by heteroatoms and the polyfunctional writing monomer preferably has a refractive index of > 1.50 at 405 nm.

11. Process according to any of Claims 1 to 10, **characterized in that** the photopolymer formulation contains, as a plasticizer, urethanes, the urethanes preferably being substituted by at least one fluorine atom.

12. Process according to Claim 11, **characterized in that**, as a plasticizer, urethanes of the general formula (V)

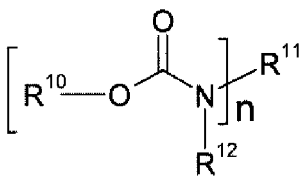

(V)

are used, in which n is $\geq 1$ and n is $\leq 8$ and $R^{10}$, $R^{11}$, $R^{12}$ are hydrogen and/or, independently of one another, linear, branched, cyclic or heterocyclic organic radicals which are unsubstituted or optionally also substituted by heteroatoms, preferably at least one of the radicals $R^{10}$, $R^{11}$, $R^{12}$ being substituted by at least one fluorine atom and particularly preferably $R^{10}$ being an organic radical having at least one fluorine atom.

13. Process according to any of Claims 1 to 12, **characterized in that** the photoinitiator system comprises an anionic, cationic or neutral dye and a coinitiator.

**14.** Holographic medium obtainable by a process according to any of Claims 1 to 13.

**Revendications**

**1.** Procédé pour la fabrication d'un film holographique, dans lequel

i) une formulation de photopolymère, comprenant

A) des polymères de matrice en tant que réseau amorphe
B) une combinaison d'un monomère d'enregistrement monofonctionnel et d'un monomère d'enregistrement multifonctionnel
C) un système photo-initiateur
D) éventuellement un composant non photopolymérisable
E) le cas échéant des catalyseurs, des stabilisateurs de radicaux, des solvants, des additifs ainsi que d'autres adjuvants et/ou substances auxiliaires
est mise à disposition,

ii) la formulation de photopolymère est appliquée en tant que film, à plat, sur un substrat et
iii) le film est séché,
**caractérisé en ce qu'**on utilise une formulation de photopolymère présentant un module de plateau $G_0 \geq 0{,}03$ MPa.

**2.** Procédé selon la revendication 1, **caractérisé en ce qu'**on utilise une formulation de photopolymère présentant un module de plateau ≥ 0,03 MPa et ≤ 1 MPa, de préférence ≥ 0,05 MPa et ≤ 1 MPa, de manière particulièrement préférée ≥ 0,1 MPa et ≤ 1 MPa et en particulier de préférence ≥ 0,1 MPa et ≤ 0,6 MPa.

**3.** Procédé selon l'une quelconque des revendications 1 ou 2, **caractérisé en ce qu'**une feuille de contrecollage est appliquée sur le film après le séchage dans l'étape iii).

**4.** Procédé selon la revendication 3, **caractérisé en ce que** le film est enroulé ensemble avec la feuille de contrecollage.

**5.** Procédé selon l'une quelconque des revendications 1 à 4, **caractérisé en ce que** le module de plateau de la formulation de photopolymère est déterminé **en ce qu'**on mesure, dans un rhéomètre oscillatoire, le durcissement de la matrice comme suit :

- mode de mesure oscillation à une fréquence angulaire constante $\omega_0$ de 10 rad/s et une amplitude de déformation régulée de 1%.
- température 50°C, régulation de la force normale réglée à 0 Newton.
- enregistrement du module d'accumulation G' sur la durée de mesure jusqu'à atteindre une valeur constante $G_{max}$ de G' ou pendant au plus 3 heures. Cette valeur est prise comme le module de plateau $G_0$.

**6.** Procédé selon l'une quelconque des revendications 1 à 5, **caractérisé en ce que** les polymères de matrice sont des polyuréthanes.

**7.** Procédé selon l'une quelconque des revendications 1 à 6, **caractérisé en ce que** les monomères d'enregistrement sont des acrylates et/ou des méth(acrylates).

**8.** Procédé selon la revendication 7, **caractérisé en ce qu'**on utilise, comme monomères d'enregistrement, une combinaison d'un monomère d'enregistrement monofonctionnel et d'un monomère d'enregistrement multifonctionnel.

**9.** Procédé selon la revendication 8, **caractérisé en ce que** le monomère d'enregistrement monofonctionnel présente la formule générale (III)

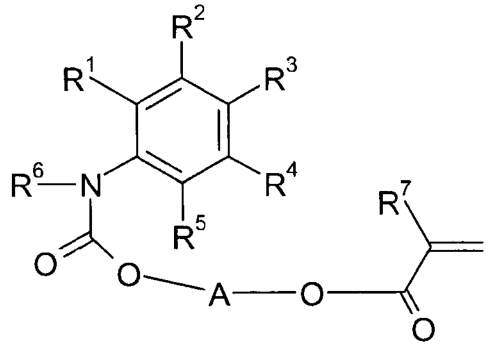

(III)

dans laquelle $R^1$, $R^2$, $R^3$, $R^4$, $R^5$ représentent, à chaque fois indépendamment les uns des autres, un atome d'hydrogène ou d'halogène ou un groupe $C_1$-$C_6$-alkyle, trifluorométhyle, $C_1$-$C_6$-alkylthio, $C_1$-$C_6$-alkylséléno, $C_1$-$C_6$-alkyltelluro ou nitro, à condition qu'au moins un substituant du groupe $R^1$, $R^2$, $R^3$, $R^4$, $R^5$ ne représente pas hydrogène, $R^6$, $R^7$ représentent à chaque fois en soi hydrogène ou un groupe $C_1$-$C_6$-alkyle et A représente un radical $C_1$-$C_6$-alkyle saturé ou insaturé ou linéaire ou ramifié ou un radical poly(oxyde d'éthylène) ou un radical poly(oxyde de propylène) comprenant à chaque fois 2-6 unités récurrentes dans la chaîne polymère et le monomère d'enregistrement monofonctionnel présente de préférence une température de transition vitreuse $T_G$ < 0°C et de préférence un indice de réfraction > 1,50 à 405 nm.

10. Procédé selon l'une quelconque des revendications 8 ou 9, **caractérisé en ce que** le monomère d'enregistrement multifonctionnel présente la formule générale (IV)

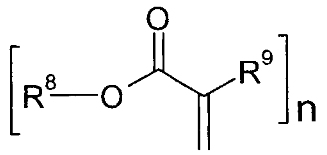

(IV)

dans laquelle $n \geq 2$ et $n \leq 4$ et $R^8$, $R^9$ représentent hydrogène et/ou, indépendamment l'un de l'autre, des radicaux organiques linéaires, ramifiés, cycliques ou hétérocycliques, non substitués ou le cas échéant également substitués par des hétéroatomes et le monomère d'enregistrement multifonctionnel présente de préférence un indice de réfraction > 1,50 à 405 nm.

11. Procédé selon l'une quelconque des revendications 1 à 10, **caractérisé en ce que** la formulation de photopolymère contient, comme plastifiant, des uréthanes, les uréthanes étant de préférence substitués par au moins un atome de fluor.

12. Procédé selon la revendication 11, **caractérisé en ce qu'**on utilise, comme plastifiant, des uréthanes de formule générale (V)

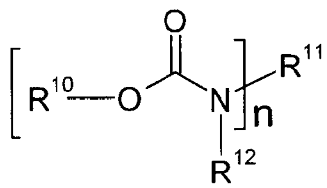

(V)

dans laquelle $n \geq 1$ et $n \leq 8$ et $R^{10}$, $R^{11}$, $R^{12}$ représentent hydrogène et/ou, indépendamment les uns des autres, des radicaux organiques linéaires, ramifiés, cycliques ou hétérocycliques, non substitués ou le cas échéant également substitués par des hétéroatomes, de préférence au moins un des radicaux $R^{10}$, $R^{11}$, $R^{12}$ étant substitué par

au moins un atome de fluor et $R^{10}$ représentant de manière particulièrement préférée un radical organique comprenant au moins un atome de fluor.

**13.** Procédé selon l'une quelconque des revendications 1 à 12, **caractérisé en ce que** le système de photo-initiateur comprend un colorant anionique, cationique ou neutre et un co-initiateur.

**14.** Agent holographique, pouvant être obtenu selon un procédé selon l'une quelconque des revendications 1 à 13.

**Figur 1:**

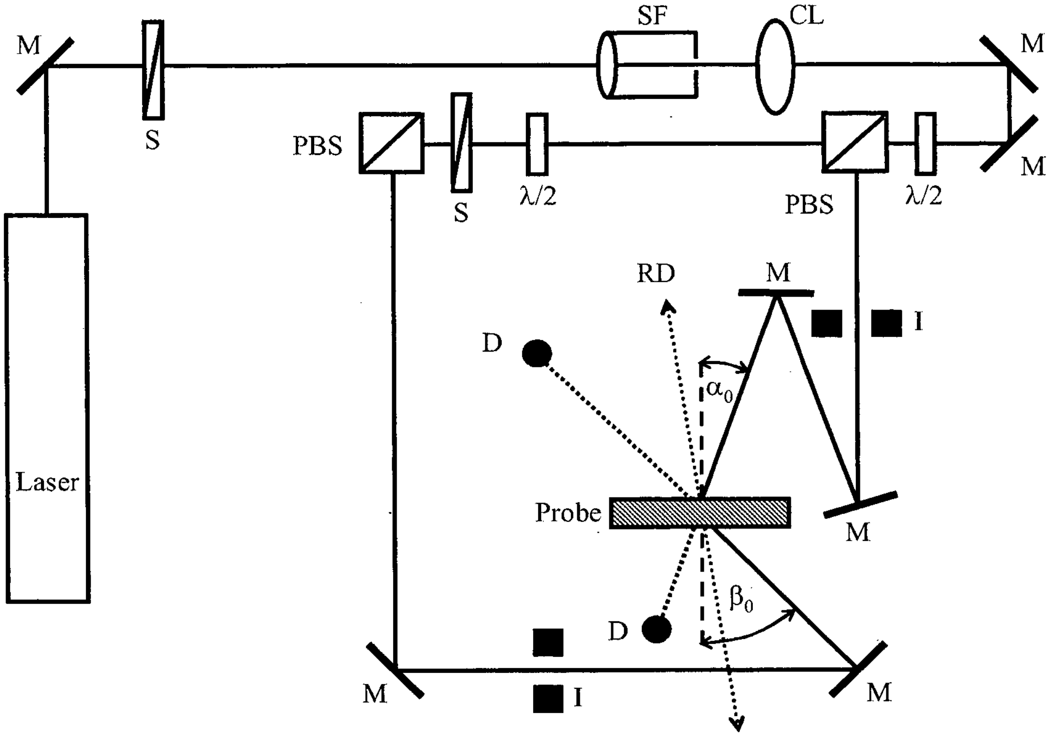


**Figur 2:**

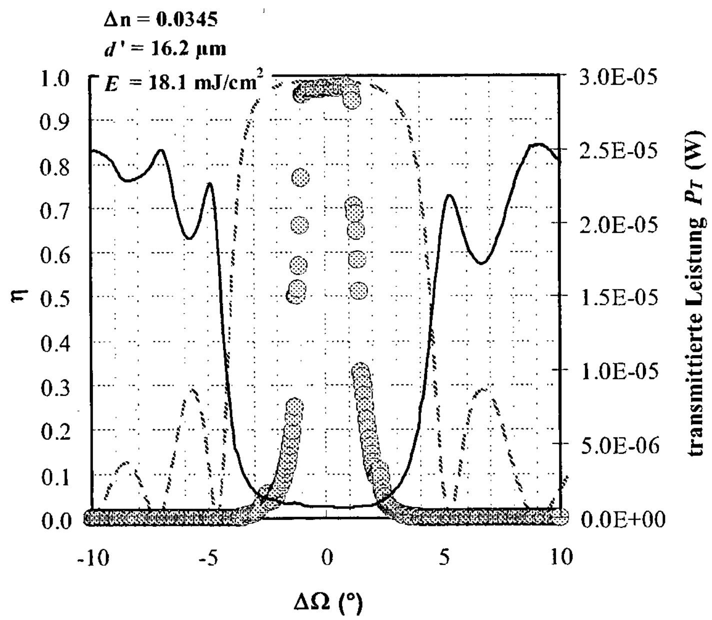

**Figur 3:**

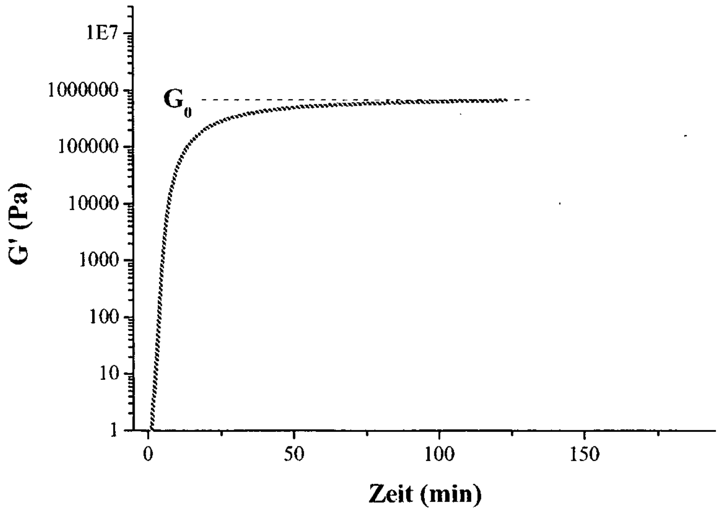


**Figur 4:**

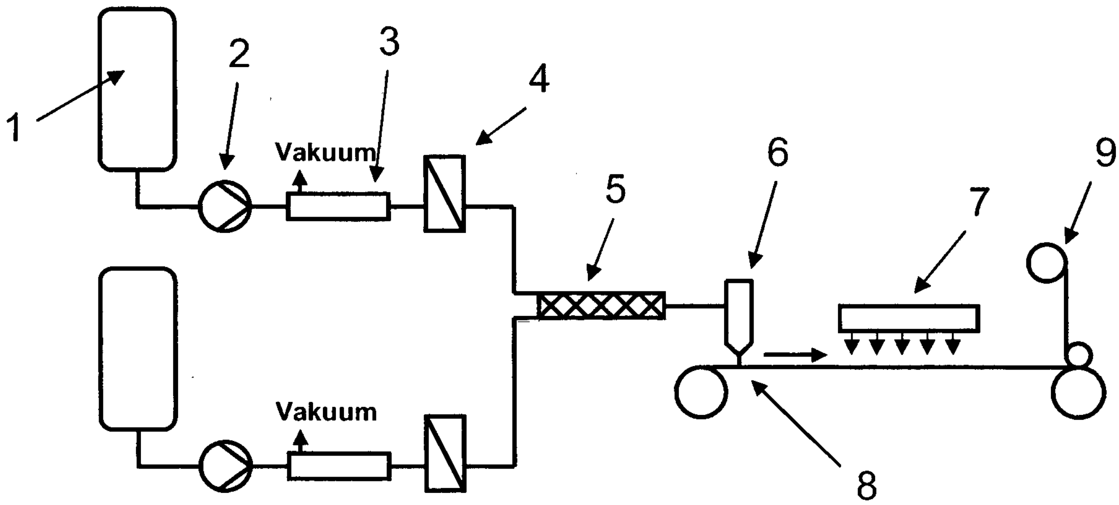

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008125199 A1
- EP 09001952 A
- WO 2008125229 A1
- EP 09009651 A
- EP 09002180 A
- EP 700949 A


### In der Beschreibung aufgeführte Nicht-Patentliteratur


- **P. HARIHARAN.** Optical Holography. Cambridge University Press, 1996
- **HOUBEN-WEYL.** Methoden der organischen Chemie. Georg Thieme Verlag, 1961, vol. XIV/1, 433ff
- **H. KOGELNIK.** *The Bell System Technical Journal,* November 1969, vol. 48 (9), 2909-2947